(19) Europäisches Patentamt
European Patent Office
Office européen des brevets

(11) EP 4 703 764 A1

(12) **EUROPEAN PATENT APPLICATION**

(43) Date of publication:
**04.03.2026 Bulletin 2026/10**

(21) Application number: **25195613.2**

(22) Date of filing: **13.08.2025**

(51) International Patent Classification (IPC):
***G01S 7/4863*** $^{(2020.01)}$ ***G01S 7/4865*** $^{(2020.01)}$
***G01S 17/18*** $^{(2020.01)}$ ***G01S 17/894*** $^{(2020.01)}$

(52) Cooperative Patent Classification (CPC):
**G01S 17/894; G01S 7/4863; G01S 7/4865; G01S 17/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.08.2024 JP 2024147288**

(71) Applicant: **CANON KABUSHIKI KAISHA**
**Ohta-ku**
**Tokyo 146-8501 (JP)**

(72) Inventor: **HIRANO, Yusuke**
**Tokyo, 146-8501 (JP)**

(74) Representative: **TBK**
**Bavariaring 4-6**
**80336 München (DE)**

# (54) IMAGE PICKUP APPARATUS, IMAGE PICKUP METHOD, AND COMPUTER PROGRAM

(57) An image pickup apparatus comprising: a photoelectric conversion element having a plurality of pixels, each pixel comprising a sensor unit configured to generate pulses in response to incident photons; a first counter and a second counter configured to count the pulses; a first memory and a second memory configured to store count values from the respective counters; a switch circuit configured to switch the connection between the sensor unit and either of the counters; a light emitting unit configured to illuminate a subject; and a control unit configured to control the switch circuit so that, based on a single emission of light by the light emitting unit, reflected light from the subject in a first distance range is counted by the first counter and reflected light from the subject in a second distance range is counted by the second counter.

FIG. 11

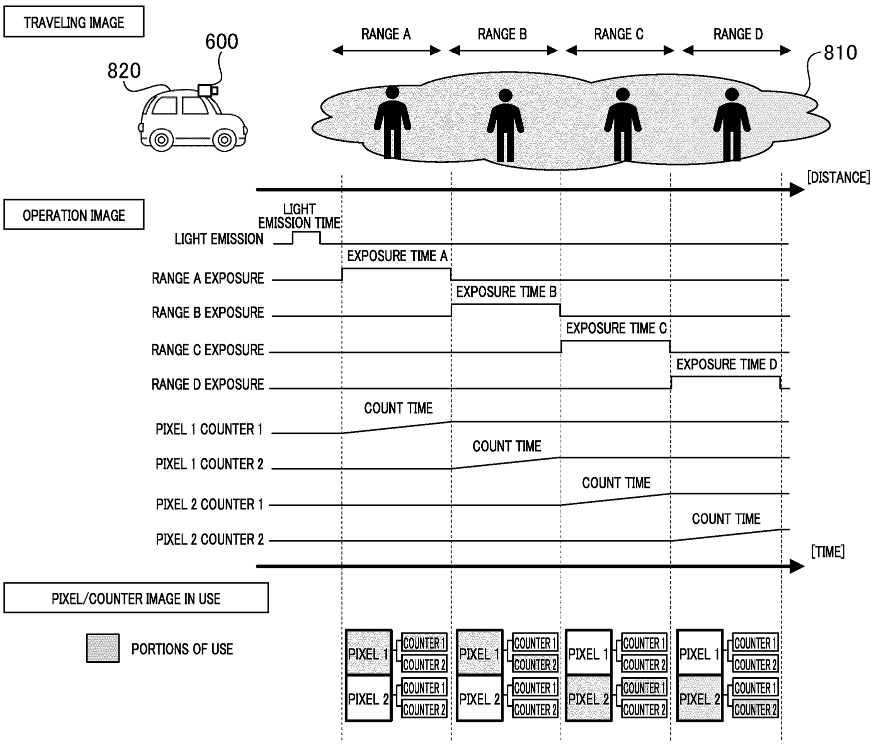


EP 4 703 764 A1

Processed by Luminess, 75001 PARIS (FR)

## Description

### TECHNICAL FIELD

The present disclosure relates to an image pickup apparatus, an image pickup method, a computer program, and the like capable of more clearly imaging a subject within a target distance range.

### BACKGROUND

A camera referred to as a "range gate camera" is known. Specifically, this is a technology in which pulsed light is emitted in front of a camera at a predetermined cycle, and an image sensor inside the camera is exposed at a predetermined timing according to a target distance range, thereby allowing only a subject within the target distance range to be clearly imaged.

Hereinafter, such a technology is referred to as "range gate control". By using this range gate control, it becomes possible to clearly image a subject (object) located at a predetermined distance even under, for example, adverse weather conditions.

Additionally, Japanese Patent Application Laid-Open No. 2017-195573 describes a technology that adjusts, via a timing controller, the timing of pulsed light emission and camera exposure to prevent imaging of an unnecessary distance range.

Additionally, Japanese Patent Application Laid-Open No. 2017-195573 describes a configuration in which a plurality of memories is provided for each pixel of an imaging element, and a plurality of exposure operations (accumulation operations) are performed by a camera in response to a single emission of pulsed light, thereby enabling acquisition of images of a plurality of target distance ranges having different distances.

However, in the configuration of Japanese Patent Application Laid-Open No. 2017-195573, in order to image a plurality of target distance ranges, it is necessary to provide, in all pixels, the same number of memories as the number of the target distance ranges, and for example, in a case in which there are two mountable memories , there are also two target distance ranges.

Therefore, in order to image three or more target distance ranges, it is necessary to re-emit pulsed light and perform imaging again, and consequently, in order to image the same amount of light, the number of pulsed light emissions and exposures increases, leading to a drawback of increased power consumption and an increased readout processing amount.

Additionally, while conventional range gate cameras typically utilize a CMOS image sensor as the imaging element, noise increases between exposure and readout, leading to a drawback of particularly noticeable noise when imaging in dark environments.

### SUMMARY

An image pickup apparatus according to one aspect of the present disclosure comprises: a photoelectric conversion element having a plurality of pixels, wherein each of the pixels comprises: a sensor unit configured to generate pulses in response to incident photons; a first counter and a second counter that count the number of the pulses; a first memory that stores a count value of the first counter; a second memory that stores a count value of the second counter; and a switch circuit for switching between a connection of the sensor unit and the first counter and a connection of the sensor unit and the second counter; a light emitting unit configured to illuminate a subject; and a control unit configured to control the switch circuit so that, based on a single emission of light by the light emitting unit, reflected light from the subject in a first distance range is counted by the first counter and reflected light from the subject in a second distance range is counted by the second counter.

Features of the present disclosure will become apparent from the following description of embodiments with reference to the attached drawings. The following description of embodiments are described by way of example.

### BRIEF DESCRIPTION OF THE DRAWINGS

FIG. 1 is a diagram illustrating a configuration example of a photoelectric conversion element 100 according to a first embodiment.

FIG. 2 is a diagram illustrating a configuration example of a sensor substrate 11 of the photoelectric conversion element 100 according to the first embodiment.

FIG. 3A is a diagram illustrating a configuration example of a circuit substrate 21 of the photoelectric conversion element 100 according to the first embodiment, and FIG. 3B is a diagram illustrating a configuration example of a counter selection control generating unit 104 that generates a signal to be supplied to each signal processing circuit 103 explained with reference to FIG. 3A.

FIG. 4 is a diagram illustrating an example of an equivalent circuit of a photoelectric conversion unit 102 of a pixel 101 and the signal processing circuit 103 corresponding to the photoelectric conversion unit 102 in FIG. 2A and FIG. 3A.

FIG. 5 is a diagram schematically illustrating the relation between the operation of an APD 201 and an output signal.

FIG. 6 is a functional block diagram illustrating a configuration example of a light emitter 500, a camera 600, and a movable apparatus 700 according to the first embodiment.

FIG. 7 is a diagram illustrating the relation between the propagation of light emitted from the light emitter 500 and the reflected light thereof, and the exposure timing of the camera 600, according to the first embodiment.

FIG. 8 is a timing chart explaining a control operation for obtaining a range gate image in one frame period according to the first embodiment.

FIG. 9 is a flowchart illustrating details of an operation example in the first embodiment.

FIG. 10 is a diagram illustrating an example in which the camera 600 acquires images of two target ranges with a single light emission using all the pixels.

FIG. 11 is a diagram illustrating an example in which the camera 600 according to the second embodiment acquires images of four target ranges with a single light emission.

FIGs. 12A and 12B are diagrams illustrating a modified example in which, in the second embodiment, the portions of the pixels and counters that are used are indicated using four pixels.

FIG. 13 is a diagram illustrating a configuration example of the counter selection control generating unit 104 corresponding to the example of FIG. 12B.

FIG. 14 is a diagram illustrating an example in which the camera 600 according to the third embodiment acquires images of three target ranges with a single light emission.

## DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate descriptions will be omitted or simplified.

### <First Embodiment>

FIG. 1 is a diagram illustrating a configuration example of a photoelectric conversion element 100 according to the first embodiment of the present disclosure. The photoelectric conversion element 100 of the present embodiment includes two substrates, namely, a sensor substrate 11 and a circuit substrate 21, and the sensor substrate 11 includes a pixel region 12. The circuit substrate 21 includes a circuit region 22 that processes a signal detected within the pixel region 12.

Note that in the present embodiment, the sensor substrate 11 and the circuit substrate 21 have a structure referred to as a laminated structure, in which the sensor substrate 11 and the circuit substrate 21 are laminated and electrically connected to each other. However, a structure referred to as a non-laminated structure may be adopted, in which the pixel region 12 that is included in the sensor substrate 11 and the circuit region 22 that is included in the circuit substrate 21 are disposed on a shared semiconductor layer.

FIG. 2 is a diagram illustrating a configuration example of the sensor substrate 11. The pixel region 12 of the sensor substrate 11 includes a plurality of pixels 101 that are two-dimensionally arranged over a plurality of rows and columns. As described above, the photoelectric conversion element 100 of the present embodiment includes the plurality of pixels 101. The pixel 101 includes a photoelectric conversion unit 102 that includes an avalanche photodiode (hereinafter referred to as an "APD").

Here, the photoelectric conversion unit 102 functions as a sensor unit that generates a pulse according to an incident photon. Note that the number of rows and the number of columns of the pixel array that configure the pixel region 12 are not particularly limited.

FIG. 3A is a diagram illustrating a configuration example of the circuit substrate 21 of the photoelectric conversion element 100 according to the first embodiment, and FIG. 3B is a diagram illustrating a configuration example of the counter selection control generating unit 104, which generates a signal to be supplied to each of the signal processing circuits 103 that are explained with in FIG. 3A.

The circuit substrate 21 includes the signal processing circuit 103 that processes charges that are photoelectrically converted by the respective photoelectric conversion units 102 shown in FIG. 2. Additionally, the circuit substrate 21 includes a readout circuit 112, a control pulse generating unit 115, a horizontal scanning circuit 111, a vertical signal line 113, a vertical scanning circuit 110, and an output circuit 114.

The vertical scanning circuit 110 receives a control pulse supplied from the control pulse generating unit 115 and sequentially supplies the control pulse to the plurality of pixels that are arranged in the row direction, on a row-by-row basis. A logic circuit such as a shift register or an address decoder is used for the vertical scanning circuit 110.

The photoelectric conversion signal generated by the photoelectric conversion unit 102 of each pixel is processed by each signal processing circuit 103. The signal processing circuit 103 is provided with a counter, a memory, and the like, and the memory holds a digital value. The horizontal scanning circuit 111 inputs a control pulse to the signal processing circuit 103 to sequentially select each column for reading out digital signals from the memory of each pixel.

A signal is output from the signal processing circuit 103 of a pixel in a row selected by the vertical scanning circuit 110 to the vertical signal line 113. The signal output to the vertical signal line 113 is output to the exterior of the photoelectric conversion element 100 via the readout circuit 112 and the output circuit 114. The readout circuit 112 includes a plurality of buffers that are connected to the vertical signal line 113.

As is illustrated in FIG. 2 and FIG. 3A, a plurality of signal processing circuits 103 are arranged in a region that overlaps the pixel region 12 in a plan view. The vertical scanning circuit 110, the horizontal scanning circuit 111, the readout circuit 112, the output circuit 114, and the control pulse generating unit 115 of the circuit substrate 21 are arranged so as to overlap with a peripheral portion outside the pixel region 12 of the sensor substrate 11 in a plan view.

Note that the arrangement of the vertical signal lines 113, the readout circuit 112, and the output circuit 114 are not limited to the example illustrated in FIG. 3A. For example, the vertical signal line 113 may be arranged to extend in the row direction, and the readout circuit 112 may be arranged at a position to which the vertical signal line 113 extends.

Additionally, it is not necessary for one signal processing circuit 103 to be provided for each photoelectric conversion unit, and this may be configured such that one signal processing circuit is shared among a plurality of photoelectric conversion units such that signal processing is sequentially performed.

The counter selection control generating unit 104 in FIG. 3B generates a count control signal to be supplied to a switch circuit 215, which will be described below and which is internal to the signal processing circuit 103. The count control signal is a signal for controlling the switch circuit 215, which is internal tothe signal processing circuit 103.

Additionally, in FIG. 3B, the configuration allows transmission of a count control signal for each row. That is, signals can be simultaneously transmitted to a plurality of pixels that are arranged in the row direction. That is, by sequentially supplying the count control signal to the plurality of pixels on a row-by-row basis, exposure of the plurality of pixels can be controlled on a row-by-row basis.

FIG. 4 is a diagram illustrating an example of an equivalent circuit of the photoelectric conversion unit 102 of the pixel 101 and the signal processing circuit 103 corresponding to the photoelectric conversion unit 102 in FIG. 2 and FIG. 3A.

The APD 201that is included in the photoelectric conversion unit 102 generates charge pairs according to incident photons. A voltage VHVL (a first voltage) is supplied to the anode of the APD 201. Additionally, a voltage VH (a second voltage) higher than the voltage VL is supplied to the cathode of the APD 201 via a quenching element 202.

A reverse bias voltage causing the APD 201 to perform avalanche multiplication operations is supplied to the anode and the cathode of the APD 201. By setting a state in which such a voltage is supplied, charges generated by incident photons cause avalanche multiplication, and an avalanche current is thereby generated.

It should be noted that, in a case in which a reverse bias voltage is supplied, there are a Geiger mode in which operation is performed with the voltage difference between the anode and the cathode being greater than the breakdown voltage, and a linear mode in which operation is performed with the voltage difference between the anode and the cathode being near the breakdown voltage, or equal to or less than the breakdown voltage.

An APD operated in the Geiger mode is referred to as a "SPAD". In the case of a SPAD, for example, the voltage VL (first voltage) is set to -30 V, and the voltage VH (second voltage) is set to 1 V.

The signal processor circuit 103 includes the quenching element 202, a waveform shaping unit 210, the switch circuit 215, a counter circuit 211a, a counter circuit 211b, a memory circuit 212a, and a memory circuit 212b. The quenching element 202 is connected between the voltage VH and the cathode of the APD 201.

The quenching element 202 functions as a load circuit (quenching circuit) during signal amplification via avalanche multiplication, and has a function to suppress the avalanche multiplication by suppressing the voltage that is supplied to the APD 201 (quenching operation). Additionally, the quenching element 202 has a function to return the voltage supplied to the APD 201 to a voltage VH by flowing a current corresponding to the voltage drop caused by the quenching operation (a recharge operation).

The waveform shaping unit 210 shapes the voltage changes at the cathode of the APD 201 obtained upon detection of a photon, and outputs a pulse signal. As the waveform shaping unit 210, for example, an inverter circuit is employed.

Note that, although FIG. 4 illustrates an example in which a single inverter is used as the waveform shaping unit 210, a circuit in which a plurality of inverters is connected in series may be used, or another circuit having a waveform shaping effect may be used.

The counter circuit 211a and the counter circuit 211b are connected to the node of the waveform shaping unit 210 via the switch circuit 215, count the number of pulses output from the waveform shaping unit 210, and hold the count value.

Here, the counter circuit 211a functions as a first counter for counting the number of pulses, and the counter circuit 211b functions as a second counter for counting the number of pulses. Additionally, the memory circuit 212a functions as a first memory that stores the count value of the first counter, and the memory circuit 212b functions as a second memory that stores the count value of the second counter.

Additionally, when the control pulse RES is supplied via a RES signal line 213, the count value held in the counter circuit 211a is stored in the memory circuit 212a, and the count value held in the counter circuit 211b is stored in the memory circuit 212b, and the count values are reset.

Note that the counter circuit 211a and the counter circuit 211b generate, as the count values, differences between the count values at the start and at the end of the accumulation period.

Note that a count control signal from the counter selection control generating unit 104, which is explained with reference to FIG. 3B, is supplied to the switch circuit 215 via a counter selection signal line 216. Note that the switch circuit 215 is for switching between a connection of the sensor unit to the first counter and a connection of the sensor unit to the second counter.

When contact 1 is selected for the switch circuit 215, the counter circuit 211a and the waveform shaping unit 210 are connected, and the counter circuit 211a counts the number of pulses.

Next, when contact 2 is selected for the switch circuit 215, the counter circuit 211b and the waveform shaping unit 210 are connected, and the counter circuit 211b counts the number of pulses.

After this,, when contact-off is selected for the switch circuit 215, the connection between the counter circuit 211b and the waveform shaping unit 210 is disconnected, and the counter circuit 211b stops counting the number of pulses.

Note that the count value of the counter circuit 211a and the count value of the counter circuit 211b are held even when contact-off is selected for the switch circuit 215 , and the connection with the waveform shaping unit 210 has thereby been disconnected. Note that, for example, in a case in which the counter selection control generating unit 104 is a circuit operating at a frequency of 100 MHz, the count control signal can be switched and controlled in units of 10 nanoseconds.

Here, the number of pulses output by the photoelectric conversion unit 102 in response to photon reception is counted only while the switch circuit 215 is connected to the contact 1 and the contact 2. Therefore, the counting period of the pulses can be alternatively referred to as the exposure period (accumulation period, counting period) of the pixel 101.

In the present embodiment, switching control of the exposure period (accumulation period, counting period) is possible at intervals in units of 10 nanoseconds. Note that, in the following explanation, the term "exposure" refers to the APD output being counted by the counter circuit.

A control pulse SEL is supplied from the vertical scanning circuit 110 to the memory circuit 212a and the memory circuit 212b via a control pulse SEL line 214, and the electrical connection between the counter circuit 211a and the vertical signal line 113 is switched on and off, and the electrical connection between the counter circuit 211b and the vertical signal line 113 is switched on and off.

The memory circuit 212a functions as a memory for temporarily storing the count value of the counter circuit 211a, and the memory circuit 212b functions as a memory for temporarily storing the count value of the counter circuit 211b. Additionally, the memory circuit 212a outputs the output signal (count value) from the counter circuit 211a to the vertical signal line 113 in a sequential manner, and the memory circuit 212b outputs the output signal (count value) from the counter circuit 211b to the vertical signal line 113 in a sequential manner.

Note that a switch such as a transistor may be disposed between the quenching element 202 and the APD 201, or between the photoelectric conversion unit 102 and the signal processing circuit 103, so as to switch the electrical connection on and off. Similarly, a switch such as a transistor or the like may be used to switch the electrical connection on and off and switch the supply of the voltage VH or the voltage VL to the photoelectric conversion unit 102.

FIG. 5 is a diagram schematically illustrating the relation between the operation of the APD 201 and an output signal. The input side of the waveform shaping unit 210 is referred to as a node A, and the output side is referred to as a node B.

Between the time t0 and the time t1, a potential difference of VH - VL is applied to the APD 201. When a photon is incident on the APD 201 at the time t1, avalanche multiplication occurs in the APD 201, an avalanche multiplication current flows through the quenching element 202, and the voltage at the node A decreases.

When the amount of voltage drop further increases and the potential difference applied to the APD 201 decreases, the avalanche multiplication of the APD 201 stops at the time t2, and the voltage level at the node A does not decrease to a value equal to or less than a certain value.

Thereafter, during the period from the time t2 to the time t3, a current compensating for the voltage drop from the voltage VL flows to the node A, and the node A stabilizes at the original potential level at the time t3. At this time, a portion of the output waveform at the node A that falls below a predetermined determination threshold is waveform-shaped by the waveform shaping unit 210 and output as a pulse signal by the node B.

FIG. 6 is a functional block diagram illustrating an example of a configuration of the light emitter 500, the camera 600, and the movable apparatus 700 according to the first embodiment. Note that, in the present embodiment, the imaging pickup apparatus is configured by the light emitter 500 and the camera 600.

Note that some of the functional blocks shown in FIG. 6 are realized by causing a computer (not illustrated) included in each of the light emitter 500, the camera 600, and the movable apparatus 700 to execute a computer program stored in a memory serving as a storage medium (not illustrated).

However, some or all of these functional blocks may also be realized by hardware. As hardware, a dedicated circuit (ASIC), a processor (a reconfigurable processor or DSP), and the like may be used. Additionally, the respective functional blocks shown in FIG. 6 do not need to be incorporated in the same housing, and may be configured by separate devices that are connected to each other via signal lines.

The camera 600 includes the photoelectric conversion element 100 that was explained with reference to FIG. 1 to FIG. 5, an imaging optical system 601, an image processing unit 603, a recognition unit 604, a camera control unit 605, a storage unit 606, a communication unit 607, and the like. The photoelectric conversion element 100 is configured by the avalanche photodiode that was explained with reference to FIG. 1 to FIG. 5 for photoelectrically converting an optical image.

The image pickup apparatus (the camera 600 and the light emitter 500) of the present embodiment is mounted on the movable apparatus 700, and, for example, the image pickup unit, which comprises a set of the imaging optical system 601 and the photoelectric conversion element 100, is configured to pick up images in at least one direction among the front, rear, and side of the movable apparatus. Note that a plurality of image pickup units may be provided on the movable apparatus 700. Alternatively, a plurality of image pickup apparatuses may be provided on the movable apparatus 700.

The image processing unit 603 performs image processing such as black level correction, gamma curve adjustment, noise reduction, digital gain adjustment, de-mosaic processing, and data compression on the image signal that is acquired by the photoelectric conversion element 100, thereby generating a final image signal.

Additionally, an output of the image processing unit 603 is supplied to the recognition unit 604 and the camera control unit 605, and is supplied to an electric control unit (ECU) 701 of the movable apparatus 700. The recognition unit 604 performs processing to recognize objects such as persons or vehicles in the vicinity by performing image recognition based on the image signal. Deep learning is used for this recognition process.

For example, as the deep learning method, You Only Look Once (YOLO), which is easy to train and fast in detection, may be used. Additionally, other deep learning methods such as Single Shot Multi Box Detector (SSD), Faster R-CNN (Regional Convolutional Neural Network), Fast R-CNN, and R-CNN may also be used.

Additionally, in the present embodiment, the recognition unit 604 calculates the distance to the recognized object. That is, the recognition unit 604 calculates a first distance range and a second distance range by recognizing the subject. Note that, as a distance measurement method, the distance may be estimated from, for example, deep learning. That is, for example, the distance value may be calculated by using deep learning to analyze information in the image of the detected object such as blur.

As another distance measurement method, the image pickup apparatus may be a stereo camera, and distance measurement may be performed using the principle of triangulation. Alternatively, the photoelectric conversion element may be a phase difference detection-type imaging element, and distance measurement may be performed using a phase difference signal from the photoelectric conversion element. The recognition processing, including the distance estimation, is performed on the image that is input from the image processing unit 603, and the recognition result is output to the ECU 701 at a subsequent stage.

Note that, in the present embodiment, although the movable apparatus 700 is explained using an example of an automobile, the movable apparatus may be any movable apparatus, such as an aircraft, a train, a ship, a drone, an AGV, or a robot.

The camera control unit 605 includes a CPU that serves as a computer and a memory that stores a computer program and controls each component of the camera 600 by causing the CPU to execute the computer program stored in the memory.

Note that the camera control unit 605 functions as a control unit, and controls, for example, the length of the exposure period (accumulation period) for each frame of the photoelectric conversion element 100 and the timing of control signals via the counter selection control generating unit 104 of the photoelectric conversion element 100.

Specifically, the camera control unit 605 transmits a reference signal, which is repeatedly output at predetermined intervals, to the counter selection control generating unit 104. The counter selection control generating unit 104 uses the reference signal as a timing reference and generates a signal to switch the switch circuit 215 at a predetermined timing.

Here, the counter selection control generating unit 104 is capable of arbitrarily setting the timing at which the switch is switched, the switch connection time, the repetition cycle, the number of repetitions, and the like. When predetermined values are set for those items by the camera control unit 605 via a control signal, a count control signal is input to the switch circuit 215 at a predetermined timing.

Accordingly, the output of the waveform shaping unit 210 is connected to the counter circuit 211a and the counter circuit 211b at a predetermined timing for a predetermined duration, whereby the exposure period of the pixel is controlled.

The camera control unit 605 also transmits the same signal as the above-described reference signal to the light emitter 500 via the communication unit 607. As was described above, the same reference signal that has been transmitted to the photoelectric conversion element 100 is also transmitted to the light emitter 500, and the light emitter 500 executes light emission control with reference to the reference signal, and the exposure timing inside of the photoelectric conversion element 100 and the light emission timing of the light emitter 500 are thereby synchronously controlled.

The storage unit 606 includes, for example, a recording medium such as a memory card or a hard disk and can store and read out an image signal. The communication unit 607 includes a wireless or wired interface, outputs the generated image signal to the exterior of the camera 600 and receives various signals from external sources.

Additionally, in the present embodiment, the communication unit 607 is connected to a communication unit 503 of the light emitter 500 and also handles the role of transmitting the above-described reference signal and transmitting a control command from the camera control unit 605 to the light emitter 500.

The light emitter 500 includes a light emitting unit 501, a light emission control unit 502, and the communication unit 503. The light emitting unit 501 includes, for example, a near-infrared LED and the like for illuminating a subject that is located in front of the movable apparatus 700, and is capable of emitting light beams in combination with a lens. Additionally, the light emitting unit outputs near-infrared pulsed light for a predetermined light emission time according to a pulse signal that is output from the light emission control unit 502.

The light emission control unit 502 receives a reference signal that is transmitted by the camera control unit 605 of the camera 600 via the communication unit 503, and, with reference to the reference signal, generates a pulse signal at a predetermined timing and outputs the pulse signal to the light emitting unit 501.

Here, the light emission control unit 502 is capable of setting a period from a reference signal to pulse output, a pulse output width, a pulse non-output width, a repetition cycle from one pulse output to a next pulse output, and a number of repetitions, and the like.

When the camera control unit 605 sets a predetermined value to the light emission control unit 502 via the communication unit 607 and the communication unit 503, a pulse signal is output to the light emitting unit 501 at a predetermined timing with reference to the reference signal, and a light emission period of the light emitter 500 is controlled.

As was described above, the light emission control unit 502 controls light emission with reference to the same signal as the reference signal that is input to the photoelectric conversion element 100.

The communication unit 503 communicates with the communication unit 607 of the camera 600, receives setting information and a reference signal for the light emission control unit 502 from the camera control unit 605, and transmits the setting information and the reference signal to the light emitting unit 501.

The ECU 701 includes a CPU that serves as a computer and a memory that stores a computer program and controls each unit of the movable apparatus 700 by causing the CPU to execute the computer program stored in the memory.

The output of the ECU 701 is supplied to a vehicle control unit 702 and a display unit 703. The vehicle control unit 702 functions as a movement control unit that performs driving, stopping, direction control, and the like of the vehicle that serves as a movable apparatus, based on the output of the ECU 701. Additionally, the display unit 703 functions as a display unit, includes a display element such as a liquid crystal device or an organic EL, and is mounted on the movable apparatus 700.

In the present embodiment, the ECU 701 receives recognition results information from the recognition unit 604 and can execute a stopping control (such as automatic braking) for the vehicle according to the content of the recognition results. The ECU 701 also receives an image from the image processing unit 603 and transmits the image to the display unit 703 together with the recognition results.

The display unit 703 displays, to the driver of the movable apparatus 700, an image that was acquired by the photoelectric conversion element 100, recognition results from by the recognition unit 604, and various kinds of information relating to the traveling state and the like of the vehicle, based on the output of the ECU 701, using, for example, a GUI.

Note that the image processing unit 603, the recognition unit 604, and the like that are shown in FIG. 6 do not necessarily need to be mounted on the movable apparatus 700. For example, they may also be provided to an external terminal and the like, which is separate from the movable apparatus 700, for purposes such as remote control or monitoring the travel of the movable apparatus 700.

FIG. 7 is a diagram illustrating the relation between the emitted light from the light emitter 500, the propagation of the reflected light, and the exposure timing of the camera 600 according to the first embodiment. In FIG. 7, the horizontal axis represents distance, and the vertical axis represents time.

As is shown in FIG. 7, in the present embodiment, an image (range gate image) of the target distance range is acquired by performing control (range gate control) in which the light emission timing and the exposure timing are synchronized according to the target distance range.

Note that, in the present embodiment, a camera that acquires a target distance image by performing range gate control as described above is referred to as a "range gate camera".

First, the horizontal axis will be explained. In the example that is shown in FIG. 7, fog 810 is present between distances x1 and x2, and a vehicle 820 is present at distance x3. Additionally, in FIG. 7, the position at the distance D from the vehicle 820, which is the target in the range gate control, is set as a start point, and a range gate image within the target distance range R from that start point is acquired.

In this case, the target distance range R becomes the target distance range to be imaged. At this time, the vehicle 820 is present within the target distance range R.

Next, the vertical axis will be explained. The time 0 is defined as the light emission start timing of the light emitter 500, and the time tf is defined as the light emission end timing. At this time, the light emission period is tf. Additionally, the position at the distance D is set as a start point, and in a case of acquiring a range gate image within the target distance range R from the start point, the exposure start time is set as the time t1, and the exposure end time is set as the time t2.

The time t1 is a timing at which the light emitted from the light emitter 500 at time 0 returns to the camera 600 as reflected light from an object at the distance D. Additionally, the time t2 is a timing at which the light that is emitted from the light emitter 500 at the time tf returns to the camera 600 as reflected light from a position advanced from an object located at the distance D by the target distance range R.

Furthermore, a timing at which the first reflected light from the fog 810 returns to the camera 600 is defined as the time t3, and a timing at which the most recent reflected light from the fog 810 returns to the camera 600 is defined as the time t4.

In the range gate control, exposure is not performed during a period from the time t3 to the time t4, during which reflected light from the fog 810 reaches the camera 600. Then, by performing exposure only during a period from the time t1 to the time t2 during which reflected light corresponding to the target distance range R from the distance D reaches the camera, it becomes possible to remove the fog 810 while clearly acquiring an image of the vehicle 820.

Here, the time until the reflected light from the target object existing at the distance x returns to the camera 600 will be explained. The timing at which the emitted light, the emission having started at the time 0, strikes an object that is present at a distance x and returns to the image pickup unit as reflected light is defined as the time tr. At this time, the relation between the time tr at which the reflected light returns and the distance x to the image pickup target object is expressed by the following formula (1).

$$\text{Time tr} = 2x/c\text{, where c is the speed of light (approximately } 3\times10^{8}\text{m/s) ... Formula (1)}$$

As is illustrated in FIG. 7, when the target distance range R from the distance D is set as the image pickup range, the exposure timing t1 at the start point of the time range corresponding to the target distance range R can be obtained by substituting the distance D for the distance x in Formula (1), as is shown in the following Formula (2).

$$\text{Time t1} = 2D/c\text{, where c is the speed of light ... Formula (2)}$$

Additionally, the exposure timing for the time t2 at the end point of the range can be obtained by substituting the distance D + the target distance range R for the distance x in the above formula (1) and adding the time tf, as shown in the following formula (3).

$$\text{Time t2} = tf + 2(D+R)/c\text{, where c is the speed of light ... Formula (3)}$$

As was described above, the time tf from the start of light emission to the end of light emission, the time t1 from the start of light emission to the start of exposure, and the time t2 from the start of exposure until the end of exposure are controlled according to the distance x (target distance range R) to be imaged. Thereby, it is possible to realize range gate control capable of clearly imaging a subject within the target range R even when fog and the like exist between the camera and the target range.

FIG. 8 is a timing chart explaining a control operation for obtaining a range gate image in one frame period according to the first embodiment. In the present embodiment, the range gate image is generated, as was described above, by exposure that is synchronized with the light emission by the light emitter 500.

Note that in FIG. 8, an example is explained in which one counter circuit and one memory circuit are respectively incorporated in the circuit diagram that is illustrated in FIG. 4.

In FIG. 8, the "vertical synchronization signal" indicates a frame period of image pickup, and a period from one Low pulse to the next Low pulse corresponds to one frame period. The "light emission control" indicates a light emission timing of the light emitter 500, and during a High level, light emission is performed by the light emitter 500. The "exposure control" indicates the count period of the counter circuit, wherein during the high level, the waveform shaping unit 210 and the counter circuit are connected, and the counter circuit counts the number of photons.

The "counter value" indicates a state of increase or decrease of the count number of photons in the counter circuit. The "RES signal" indicates a control pulse supplied to the counter circuit via the RES signal line 213, and the count value that is held in the counter circuit is reset by the pulse.

Next, range gate control for obtaining a range gate image will be explained. In the present embodiment, a light emission period for the light is controlled in a pulsed manner by the light emission control unit 502, and counting of the number of photons is performed only for reflected light from a predetermined target distance range.

As described above, the light emission period from the start to the end of light emission is defined as tf, the time from the start of light emission to the start of photon count is defined as t1, and the time from the start of light emission to the end of photon count is defined as t2. In this case, time t1 indicates a period during which light, after the start of light emission, reaches a target distance range and reflected light returns to the camera 600.

Additionally, the period from t1 to t2 is defined as the period during which the number of photons of reflected light from the target distance range is counted, and this period corresponds to the duration from the start to the end of connection between the waveform shaping unit 210 and the counter circuit, during which the counter value increases in accordance with the number of photons.

In order to properly perform range gate control, it is necessary to synchronize the timing of the light emission start and the timing of the exposure start in accordance with a predetermined target distance range. In the present embodiment, the camera control unit 605 transmits an identical reference signal to the counter selection control generating unit 104 and the light emission control unit 502, thereby synchronizing operation timings of the counter selection control generating unit 104 and the light emission control unit 502.

Additionally, as is illustrated in the light emission control of the timing chart in FIG. 7, the period from the start of one light emission to the start of the subsequent light emission constitutes one range gate operation cycle. Then, the counter value that is counted during one range gate operation cycle is held, and the counter value is added to during the subsequent range gate operation cycle. Note that the period from one light emission to the subsequent light emission is set based on the time until the reflected light is sufficiently attenuated and no longer returns to the camera 600.

As is illustrated in FIG. 8, a predetermined plurality of range gate operation cycles that are set in advance are executed within one frame period, and the count value of the counter circuit is accumulated. Then, in response to the RES signal, information on the counter value most recently accumulated within one frame period is transferred from the counter circuit to the memory circuit, and thereafter, the counter value is reset.

Since the exposure period is synchronized with the light emission by the light emitter 500, a clear image of the target range can be obtained even under adverse weather conditions such as fog.

FIG. 9 is a flowchart illustrating details of an operation example according to the first embodiment. In this flowchart, each step from step S101 to step S107 is sequentially executed by a CPU and the like that serves as a computer in the camera control unit 605 executing a computer program that is stored in a memory.

Additionally, each of the steps S201 to S206 is sequentially executed by a CPU that serves as a computer inside the ECU 701 executing a computer program stored in a memory.

In step S101 of FIG. 9, the camera control unit 605 performs setting of the light emitter 500. Specifically, a pulse output width, an output period, a repetition cycle, and the number of repetitions for generating a pulse signal at a predetermined timing are set for the light emission control unit 502 that is internal to the light emitter 500. This is set according to the target distance range to be imaged in the range gate control as shown in FIG. 7.

Next, in step S102, setting of the photoelectric conversion element 100 is performed. That is, the camera control unit 605 performs setting of the photoelectric conversion element 100. Specifically, various settings for photoelectrically converting an optical image from the imaging optical system 601 and generating an image signal are performed on the circuit substrate 21 that is internal to the photoelectric conversion element 100.

In the present embodiment, the above-described settings for the photoelectric conversion element 100 include the timing at which the counter selection control generating unit 104 switches the switch circuit 215 with a count control signal, the switch connection time, the repetition cycle, and the number of repetitions. In this step, parameter settings for the image processing unit 603 and the recognition unit 604 are completed.

Next, in step S103, image pickup is started. That is, the camera control unit 605 controls the camera 600 to initiate image pickup. Specifically, the camera control unit 605 issues a light emission start instruction to the light emitter 500 to start light emission and instructs the photoelectric conversion element 100 to output a vertical synchronization signal, thereby starting an exposure operation (a count operation of the counter circuit by generating a count control signal) and the generation of an image signal.

Additionally, as was described above, the light emission on the light emitter 500 side and the exposure operation on the photoelectric conversion element 100 side are synchronously controlled based on a reference signal from the camera control unit 605.

Next, in step S104, acquisition of an image is performed. That is, the camera control unit 605 controls the image processing unit 603, performs various kinds of image processing on the image signal that is output from the photoelectric conversion element 100, and generates a final image signal. Here, an image is generated using a signal that is output from the photoelectric conversion element 100.

Next, in step S105, recognition processing is executed. That is, recognition processing is executed on the image that was acquired in step S104 using the recognition unit 604. By the recognition processing, an object such as a person or a vehicle in the image is detected, and further, a distance to the detected object is estimated. In the present embodiment, detection of an object under adverse weather conditions such as fog is possible.

Here, step S105 functions as a recognition step (recognition unit) for calculating at least a first distance range and a second distance range by recognizing a subject.

Next, in step S106, transmission of the image and the recognition results is performed. That is, the image acquired in step S104 and the recognition results from step S105 are transmitted to the ECU 701 that is internal to the movable apparatus 700. The recognition results to be transmitted include, for example, the name of a detected object, position and size information of a detection frame, distance information of the detected object, and the like.

In step S107, the camera control unit 605 determines whether or not there is processing for a next frame. In a case in which there is processing for a next frame, the flow returns to step S104, and the processing is continued, whereas in a case in which there is no processing for a next frame, the flowchart on the camera control unit 605 side ends.

Next, the processing for steps S201 to S206, which is executed by the CPU inside of the ECU 701, will be explained. In step S201, the ECU 701 determines whether or not the image and the recognition results have been received. This is a process of receiving the data that is transmitted by step S106 as described above. In a case in which the image and the recognition results have been received, the processing proceeds to step S202, whereas in a case in which the image and the recognition result have not been received, the processing returns to step S201.

Next, in step S202, the ECU 701 determines whether or not an object is present within a predetermined range in front of the camera 600. The predetermined range is, for example, a range of a distance longer by a predetermined distance than a range in which the movable apparatus 700 can safely stop without colliding with an object in a case in which the movable apparatus 700 urgently performs a braking operation.

In a case in which it is determined that no object is present within the predetermined range, the processing proceeds to step S204, whereas in a case in which it is determined that an object is present within the predetermined range, the processing proceeds to step S203.

In step S203, the ECU 701 executes automatic braking. That is, the vehicle control unit 702 is controlled to execute a stopping control for the movable apparatus 700. Accordingly, a collision between the object detected within the predetermined range and the movable apparatus 700 is avoided.

Next, in step S204, the ECU 701 generates a display image to be displayed on the display unit 703. The display image includes detection results for an object and information indicating the execution of automatic braking. Next, in step S205, the display image that was generated in step S204 is displayed on the display unit 703 to provide a notification to the driver of the movable apparatus 700. Consequently, the driver is able to understand the object detection results and the execution of automatic braking.

In step S206, the ECU 701 determines whether or not there is processing for a next frame processing. In a case in which there is processing for a next frame, the processing returns to step S201 and is continued, whereas in a case in which there is no processing for a next frame, the flowchart on the ECU 701 side ends.

FIG. 10 is a diagram illustrating an example in which the camera 600 acquires images of two target ranges using a single light emission using all of the pixels. In FIG. 10, the "traveling image" illustrates a state in which target distance ranges from the camera 600 that is mounted on the vehicle 820 are defined as a range A and a range B in order from near to far, wherein a subject is present in each range, and the fog 810 is present throughout all of the ranges.

The "operation image" in FIG. 10 illustrates, with the horizontal axis representing time, the exposure periods corresponding to each range after the emission of the pulsed light, and the counting status of photons by the counter circuit. Additionally, the "pixel/counter image in use" illustrates an example of the counter circuit in use among two counter circuits respectively mounted on, for example, a pixel 1 and a pixel 2, which are two pixels that are adjacent to each other in the column direction within the pixel region 12.

In FIG. 10, the first counter circuit is represented as a counter 1, and the second counter circuit is represented as a counter 2. The pixels and counter circuits in use are indicated in gray. Note that, although FIG. 10 illustrates an example of the camera 600 having two counter circuits per pixel, the camera may also have three or more counter circuits per pixel.

A relation among a distance range, an exposure period, a photon count state, a pixel in use, and a counter circuit when the camera 600 performs two exposures per single light emission will be explained.

After a single light emission, when the reflected light from range A returns to the camera 600, exposure of the range A is performed (the APD output is counted by the counter circuit).

As shown in the "operation image," the exposure period A corresponding to the range A is indicated as the "range A exposure," and the number of photons is counted by the counter 1 of the pixel 1 and the counter 1 of the pixel 2 according to the exposure period A. Note that, as was described above, in the "pixel/counter image in use," the pixels and counters in use are shaded in gray for clarity.

Next, when the reflected light from the range B returns to the camera 600, exposure of the range B is performed (the APD output is counted by the counter circuit). As is shown in the "operation image," the exposure period B corresponding to the range B is indicated as the "range B exposure". Then, according to the exposure period B, the number of photons is counted by the counter 2 of the pixel 1 and the counter 2 of the pixel 2.

As was described above, to perform two exposures (the APD output being counted by the counter circuit) using reflected light from a single light emission, two counter circuits are mounted on each pixel, and during the first exposure, the counter 1 counts and holds the number of photons of the reflected light from the range A. Additionally, during the second exposure, the counter 2 counts and holds the number of photons of the reflected light from the range B.

That is, a control step of controlling the switch circuit 215 is executed so that, with one light emission from the light emitting unit, the reflected light from the subject in the range A is counted by the first counter, and the reflected light from the subject in the range B is counted by the second counter. In the present embodiment, the range A functions as a first distance range, and the range B functions as a second distance range.

Additionally, in the present embodiment, reflected light from a subject in the range A that serves as a first distance range, resulting from a single light emission of the light-emitting unit, is counted by the first counter of the pixel 1 and the first counter of the pixel 2. Additionally, reflected light from a subject in the range B that serves as a second distance range is counted by the second counter of the pixel 1 and the second counter of the pixel 2.

Thus, it is possible to obtain photon number information that serves as the basis of images of two target distance ranges using a single light emission, and to capture an image of a subject within the target distance ranges. Additionally, power consumption can be reduced by reducing the number of times that light emission is performed, and the time required to obtain the same amount of light can be shortened.

As was described above, in the present embodiment, by providing two counter circuits to each pixel, it becomes possible, by range gate control, to clearly image a subject located at a predetermined distance even under adverse weather conditions, and to simultaneously capture an image having good visibility in dark areas from a short distance to a long distance without requiring a plurality of frames.

Furthermore, in the image processing unit 603 of the present embodiment, a first image is generated by reading out a count value of the counter 1 that is obtained during an exposure period A, a second image is generated by reading out a count value of the counter 2 that is obtained during an exposure period B, and the first image and the second image are combined. As a result, it becomes possible to obtain a combined image in which an image of the range A and an image of the range B are combined.

At this time, the image processing unit 603 functions as a combining unit that combines an image that is obtained based on a count value of the first counter and an image that is obtained based on a count value of the second counter.

Additionally, there is a type of SPAD referred to as a clock recharging type SPAD, in which, after avalanche multiplication occurs in a voltage at both terminals of a photodiode within a pixel, a reverse voltage is applied such that avalanche multiplication occurs again after an external clock is input.

In the case of this method, avalanche multiplication and counting (exposure) by the counter circuit can be stopped by stopping the supplied clock (that is, by clock gating).

Although in the present embodiment, counting (exposure) is stopped by a count control signal, it is also possible to adopt a configuration in which the same effect as that of the present embodiment is achieved by the above-described clock gating in the case of a SPAD according to the clock recharging method. In this case, avalanche multiplication does not occur in the count stop state, and power consumption can be reduced.

<Second Embodiment>

Hereinafter, a second embodiment of the present disclosure will be explained. Note that in the first embodiment, a method was explained in which two counter circuits are provided per each pixel, and images of two target ranges are acquired using a single light emission.

In the second embodiment, a method in which two counter circuits are provided per each pixel and images of four target ranges are acquired using a single light emission will be explained. Note that the configuration of the functional blocks of the image pickup apparatus in the second embodiment is basically the same as that in the first embodiment.

Hereinafter, differences between the two embodiments will be predominantly be explained, and explanations of similar portions will be omitted. Additionally, explanations are given for portions corresponding to those in the first embodiment by using the same reference numerals therefor.

FIG. 11 is a diagram illustrating an example in which images of four target ranges are acquired using a single light emission in the camera 600 according to the second embodiment. In FIG. 11, the "traveling image" represents a state in which target distance ranges at certain distances from the camera 600 that is mounted on the vehicle 820 are defined as the range A, the range B, the range C, and the range D in order from near to far, wherein a subject is present in each range, and the fog 810 is present in all the ranges.

The "operation image" represents, with the horizontal axis as a time axis, the exposure periods of reflected light corresponding to each range after the emission of the pulsed light, and the counting status of photons by the counter circuit. Additionally, the "pixel/counter image in use" shows, for example, two pixels that are adjacent to each other in the column direction within the pixel region 12 as the pixel 1 and the pixel 2 and further illustrates connections to two counter circuits mounted on each pixel.

Also in FIG. 11, an example of the camera 600 having two counter circuits per pixel is illustrated, where the first counter circuit is denoted as a counter 1, and the second counter circuit is denoted as a counter 2. The pixels and counter circuits in use are indicated in gray.

A relation among a distance range, an exposure period, a photon count state, a pixel in use, and a counter circuit when the camera 600 performs four exposures per single light emission will be explained.

After the light emission, when the reflected light from the range A returns to the camera 600, exposure of the range A is performed (the APD output is counted by the counter circuit). As illustrated in the "operation image," the exposure period A corresponding to the range A is shown as the "range A exposure," and the number of photons is counted by the counter 1 of the pixel 1 according to the exposure period A. In FIG. 11, in the pixel/counter image in use, and the pixels and counters that are in use are shaded in gray.

Next, when the reflected light from the range B returns to the camera 600, exposure of the range B is performed (the APD output is counted by the counter circuit). As illustrated in the "operation image," the exposure period B corresponding to the range B is shown as the "range B exposure," and the number of photons is counted by the counter 2 of the pixel 1 according to the exposure period B.

Next, when the reflected light from the range C returns to the camera 600, exposure of the range C is performed (the APD output is counted by the counter circuit). As illustrated in the "operation image", the exposure period C corresponding to the range C is shown as the "range C exposure," and the number of photons is counted by the counter 1 of the pixel 2 according to the exposure period C.

Additionally, when the reflected light from the range D returns to the camera 600, exposure of the range D is performed (the APD output is counted by the counter circuit). As illustrated in the "operation image", the exposure period D corresponding to the range D is shown as the "range D exposure," and the number of photons is counted by the counter 2 of the pixel 2 according to the exposure period D.

Thus, to perform four exposures with the reflected light from a single light emission, two counter circuits are provided per each pixel, and in the first exposure, the number of photons of the reflected light in the range A is counted and held by the counter 1 of the pixel 1.

In the second exposure, the number of photons of the reflected light from the range B is counted and held by the counter 2 of the pixel 1, and in the third exposure, the number of photons of the reflected light from the range C is counted and held by the counter 1 of the pixel 2. Additionally, in the fourth exposure, the number of photons of the reflected light from the range D is counted and held by the counter 2 of the pixel 2.

That is, in the present embodiment, the switch circuit is controlled such that the reflected light from the range A is counted by the first counter of the pixel in a predetermined row, and the reflected light from the range C or the range D is counted by the first counter or the second counter of a pixel in a row that is adjacent to the predetermined row. Note that in the present embodiment, the range A functions as a first distance range, and the range C and the range D function as a second distance range.

By configuring the present disclosure as was described above, it becomes possible to obtain the photon number information that serves as a basis for images of four target distance ranges using a single light emission, and to capture a subject within the target distance ranges. Additionally, power consumption can be reduced by reducing the number of light emissions.

In the second embodiment, the resolution in the column direction (vertical scanning direction) is reduced to one half and, because there are pixels from which photon number information cannot be obtained, it is necessary to perform interpolation using the pixel information of adjacent pixels that have photon number information when combining the image.

FIGs. 12A and 12B are diagrams illustrating a modified example in which, in the second embodiment, portions of use of pixels and counters are indicated using four pixels.

Similarly to FIG. 11, target distance ranges located at distances gradually increasing from the camera 600 are defined as the range A, the range B, the range C, and the range D in order from near to far, and pixels and counters used during exposure in the respective ranges are indicated in gray.

In FIG. 12, four predetermined pixels arranged in a $2 \times 2$ array, extracted from the pixel region 12, are illustrated, wherein pixels in the downward direction from the upper left are referred to as the pixel 1 and the pixel 2, and pixels in the downward direction from the upper right are referred to as the pixel 3 and the pixel 4. Additionally, inside the pixel, the first counter circuit is indicated as C1 and the second counter circuit is indicated as C2.

In the example shown in FIG. 12A, for the range A, exposure information is stored in the counter 1 of the pixel 1 and the counter 1 of the pixel 3, and for the range B, exposure information is stored in the counter 1 of the pixel 2 and the counter 1 of the pixel 4. Additionally, for the range C, exposure information is stored in the counter 2 of the pixel 1 and the counter 2 of the pixel 3, and for the range D, exposure information is stored in the counter 2 of the pixel 2 and the counter 2 of the pixel 4.

In FIG. 12A, the stored information is arranged in the row direction. Therefore, since the count control signal lines can be connected by a single wiring line to the signal processing circuits 103 that are arranged in a horizontal row as shown in FIG. 3B, the count control signal lines can be arranged simply.

In contrast, in the example that is shown in FIG. 12B, for the range A, exposure information is stored in the counter 1 of the pixel 1 and the counter 1 of the pixel 4, and for the range B, exposure information is stored in the counter 1 of the pixel 2 and the counter 1 of the pixel 3. Additionally, for the range C, exposure information is stored in the counter 2 of the pixel 1 and the counter 2 of the pixel 4, and for the range D, exposure information is stored in the counter 2 of the pixel 2 and the counter 2 of the pixel 3.

That is, in the present embodiment, the switch circuit is controlled such that the reflected light from the first distance range is counted by the first counter of a pixel in an odd-numbered column of a predetermined row and also by the first counter of a pixel in an even-numbered column of a row that is adjacent to the predetermined row. Note that at this time, the switch circuit may be controlled such that the second counter of the pixel in the even-numbered column of the row that is adjacent to the predetermined row performs the counting.

As is shown in FIG. 12B, the stored information is arranged in a staggered positional relation, and data for each range is acquired from the signal processing circuits 103 that are located at the staggered positions. Therefore, when images are combined, interpolation can be performed by referring to information from four adjacent pixels in the vertical and horizontal directions, whereby the resolution can be further improved in comparison to the case of FIG. 12A, in which information is acquired along a single straight line.

FIG. 13 is a diagram illustrating a configuration example of the counter selection control generating unit 104 corresponding to the example of FIG. 12B. Although it has been explained in the explanation of FIG. 12B that the resolution can be improved by acquiring information from the signal processing circuits 103 that are located at staggered positions and performing interpolation, the wiring line in that case becomes complicated as is shown in FIG. 13.

In FIG. 13, to transmit the count control signal from the counter selection control generating unit 104 to the signal processing circuits 103 that are located at staggered positions relative to the signal processing circuits 103 that are arranged in the row direction, the wiring line is connected to every other signal processing circuit 103.

For example, in the upper row of the signal processing circuits 103, the count control signals from the counter selection control generating unit 104 are supplied to the first and third signal processing circuits 103, which are odd-numbered, via a shared wiring line. Additionally, the count control signals from the counter selection control generating unit 104 are supplied to the second and fourth signal processing circuits 103, which are even-numbered, via a different wiring line. Therefore, two wiring lines are required for the signal processing circuits 103 that are arranged in the row direction, which increases the difficulty of circuit formation.

As was described above, in order to perform four exposures using reflected light from a single light emission, two counter circuits are mounted on each pixel, and by counting and holding photon number information for four target ranges with four counters that are mounted on two pixels, the resolution can be improved.

Additionally, photon number information that serves as the basis of the images of the four target ranges can be obtained using a single light emission, thereby enabling the capturing of images of subjects within the target ranges. Thus, even in the case of capturing images of four target ranges, power consumption can be reduced by reducing the number of light emissions.

<Third Embodiment>

Hereinafter, a third embodiment of the present disclosure will be explained. In the first embodiment, a method is explained in which two counter circuits are mounted on each pixel in order to acquire images of two target distance ranges using a single light emission. Additionally, in the second embodiment, a method is explained in which two counter circuits are mounted on each pixel to acquire images of four target distance ranges using a single light emission.

In the third embodiment, a method of acquiring images of three target distance ranges using a single light emission that combines the first embodiment and the second embodiment will be explained. Note that the image pickup apparatus in the third embodiment is fundamentally the same as that in the first embodiment. Therefore, in the following explanation, differences between the third embodiment and the first embodiment will mainly be explained, and explanations of the similar portions will be omitted. Additionally, portions corresponding to those in the first embodiment are explained by denoted them with the same reference numerals.

FIG. 14 is a diagram illustrating an example in which the camera 600 of the third embodiment acquires images of three target distance ranges using a single light emission. In FIG. 14, the "traveling image" represents a state in which the target distance ranges that gradually increase in distance from the camera 600 that is mounted on the vehicle 820 are defined as the range A, the range B, and the range C in order from near to far, wherein a subject is present in each of the ranges, and fog 810 is present throughout all the ranges.

The "operation image" represents, with the horizontal axis as the time axis, the exposure periods of reflected light corresponding to each range after emission of the pulse light, and the count states of the photon numbers counted by the counter circuits.

Additionally, the "pixel/counter image in use" illustrates two adjacent pixels in the column direction within the pixel region 12, which are for example, referred to as the pixel 1 and the pixel 2, and represents the connections to the two counter circuits that are respectively mounted on the pixel 1 and the pixel 2.

In FIG. 14 as well, the first counter circuit is indicated as the counter 1, and the second counter circuit is indicated as the counter 2. The pixels and counter circuits that are in use are indicated in gray. Note that FIG. 14 illustrates an example of the camera 600 having two counter circuits per pixel.

A relation among a distance range, an exposure period, a photon count state, a pixel in use, and a counter circuit when the camera 600 performs three exposures per single light emission will be explained.

The exposures for the range A and the range B (the APD output is counted by the counter circuit) are similar to the example that is shown in FIG. 12A. Among the four counter circuits of the two pixels, one counter circuit is used for either the range A or the range B.

That is, in the example of FIG. 14, the information for the range A is obtained using the counter 1 of the pixel 1, and the information for the range B is obtained using the counter 1 of the pixel 2. For the exposure of the range C, the counter 2 of the pixel 1 and the counter 2 of the pixel 2 are used, as was shown in FIG. 10.

Note that in the present embodiment, the range A functions as the first distance range, the range B functions as the second distance range, and the range C functions as the third distance range. Here, the third distance range is located farther from the image pickup apparatus than the first distance range.

Additionally, the switch circuit is controlled such that the reflected light from the third distance range is counted by the second counter of the pixel 1 in a predetermined row and by the second counter of the pixel 2 in a row that is adjacent to the predetermined row. However, at this time, the switch circuit may be controlled such that the first counter of the pixel 2 performs the counting.

By performing the exposure in this manner, it becomes possible to acquire a high-resolution image of the range C, which is located farther from the camera 600, thereby facilitating the recognition of objects and characters.

In contrast, since the range A and the range B are located close to the camera 600, the recognition of objects and written characters is relatively easy even when the resolution is reduced. Thus, in the present embodiment, the number of target distance ranges can be increased in a manner that is effective for practical use.

Note that, in addition to the examples that are shown in FIG. 10 to FIG. 14, the combinations may also be modified depending on the conditions. For example, exposure may be performed on all pixels even in the range A and the range B. Additionally, although the above embodiments explain an example in which the resolution in the column direction (vertical scanning direction) is reduced to one-half, configurations in which the resolution in the column direction is reduced to one-third or one-fourth may also be combined.

According to the above embodiment, an image pickup apparatus capable of obtaining images having improved visibility in a plurality of distance ranges with a single light emission can be provided.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the image pickup apparatus through a network or various storage media. Then, a computer (or a CPU, an MPU, or the like) of the image pickup apparatus may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2024-147288, filed on August 29, 2024, which is hereby incorporated by reference herein in its entirety.

## Claims

**1.** An image pickup apparatus comprising:

a photoelectric conversion element having a plurality of pixels,
wherein each of the pixels comprises:

a sensor unit configured to generate pulses in response to incident photons;
a first counter and a second counter that count the number of the pulses;
a first memory that stores a count value of the first counter;
a second memory that stores a count value of the second counter; and
a switch circuit for switching between a connection of the sensor unit and the first counter and a connection of the sensor unit and the second counter;
a light emitting unit configured to illuminate a subject; and
a control unit configured to control the switch circuit so that, based on a single emission of light by the light emitting unit, reflected light from the subject in a first distance range is counted by the first counter and reflected light from the subject in a second distance range is counted by the second counter.

**2.** The image pickup apparatus according to Claim 1,

wherein the plurality of pixels is two-dimensionally arranged in a plurality of rows and columns, and
wherein the control unit is configured to control exposure of the pixels on a row-by-row basis by sequentially supplying a count control signal to the plurality of pixels on a row-by-row basis.

**3.** The image pickup apparatus according to Claim 1 or 2, wherein the control unit is configured to control the switch circuit so that reflected light from the first distance range is counted by the first counter of the pixel in a predetermined row, and reflected light from the second distance range is counted by the first counter or the second counter of the pixel in a row that is adjacent to the predetermined row.

**4.** The image pickup apparatus according to Claim 3, wherein the control unit is configured to control the switch circuit so that reflected light from a third distance range is counted by the second counter of the pixel in the predetermined row and is also counted by the first counter or the second counter of the pixel in the row that is adjacent to the predetermined row.

**5.** The image pickup apparatus according to Claim 4, wherein the third distance range is a distance range that is farther away than the first distance range.

**6.** The image pickup apparatus according to any one of Claims 1 to 5, wherein the control unit is configured to control the switch circuit so that reflected light from the first distance range is counted by the first counter of the pixel in an odd-numbered column of a predetermined row and is counted by the first counter of the pixel in an even-numbered column of a row that is adjacent to the predetermined row.

**7.** The image pickup apparatus according to any one of Claims 1 to 6, further comprising a combining unit configured to combine an image obtained based on a count value of the first counter and an image obtained based on a count value of the second counter.

**8.** The image pickup apparatus according to any one of Claims 1 to 7, further comprising a recognition unit configured to calculate the first distance range and the second distance range by recognizing the subject.

**9.** An image pickup method using a light emitting unit configured to illuminate a subject and a photoelectric conversion element having a plurality of pixels,
wherein each of the pixels comprises:

a sensor unit configured to generate pulses in response to incident photons;
a first counter and a second counter that count the number of the pulses;
a first memory that stores a count value of the first counter;
a second memory that stores a count value of the second counter; and
a switch circuit for switching between a connection of the sensor unit and the first counter and a connection of the sensor unit and the second counter;
the image pickup method comprising:
controlling the switch circuit so that, based on a single emission of light by the light emitting unit, reflected light from a first distance range is counted by the first counter and reflected light from a second distance range is counted by the second counter.

**10.** A computer program comprising instructions which, when the program is executed by a computer, cause the computer to carry out the method of claim 9.

FIG. 1

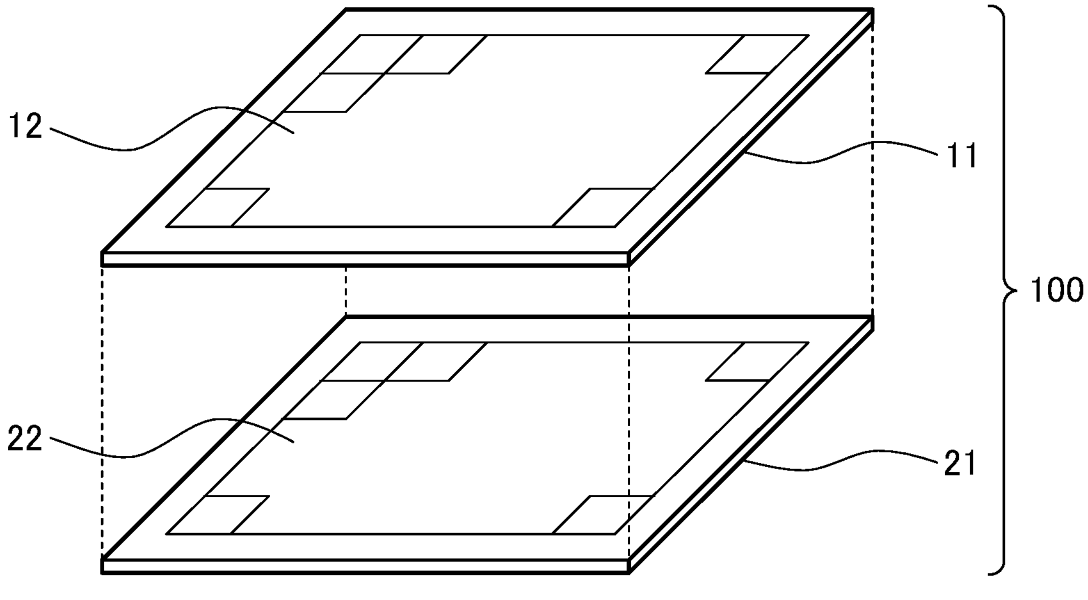

FIG. 2

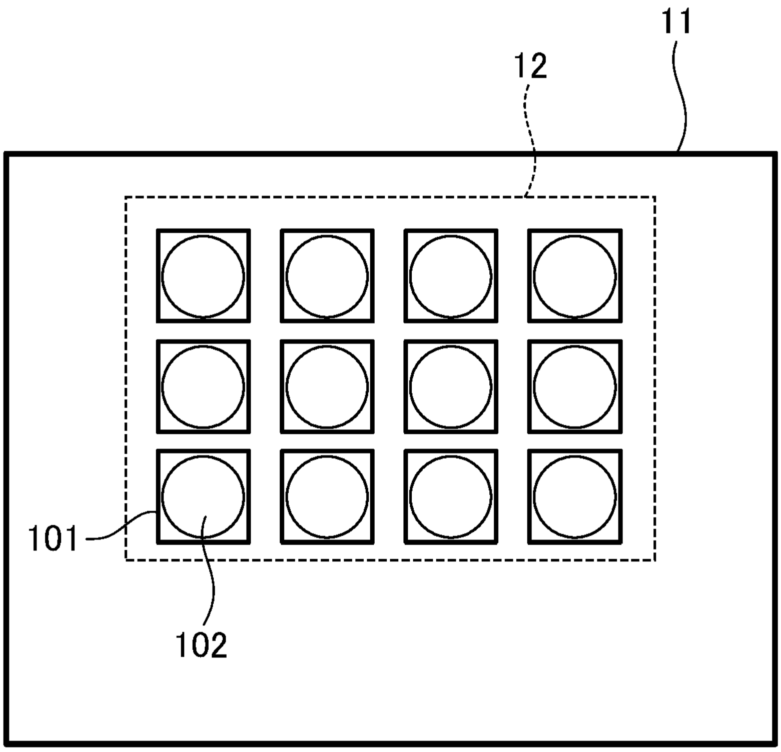

FIG. 3A

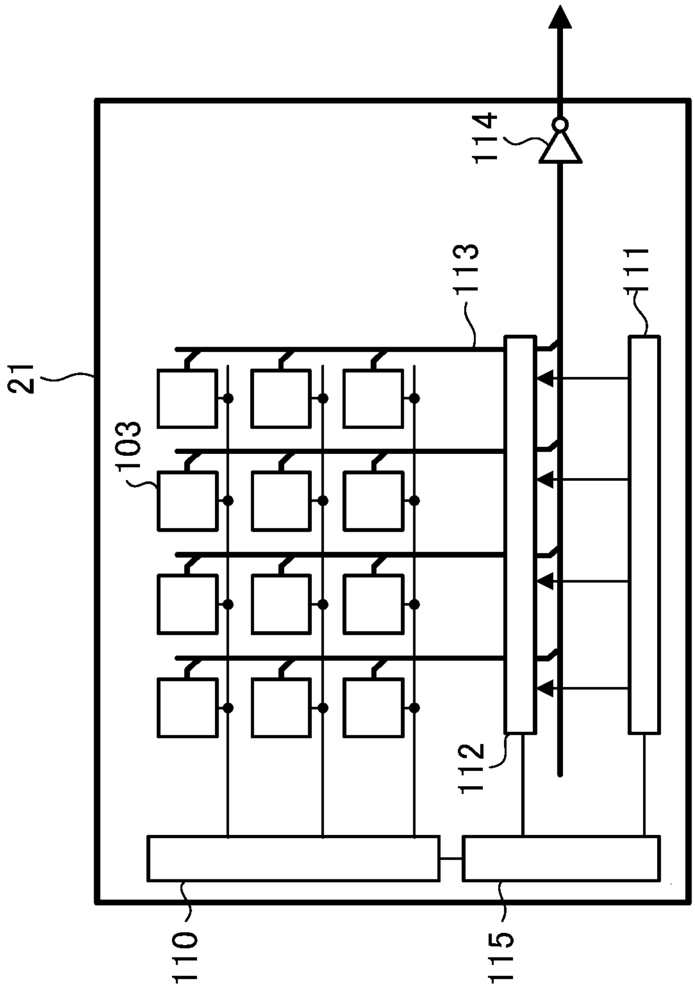


FIG. 3B

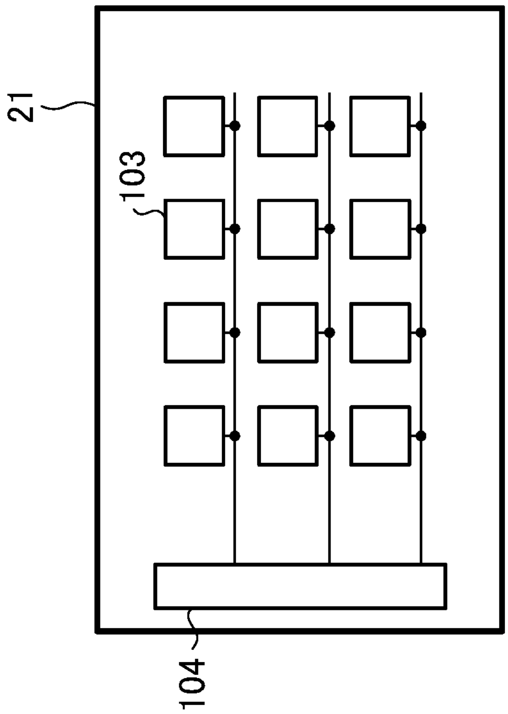

FIG. 4

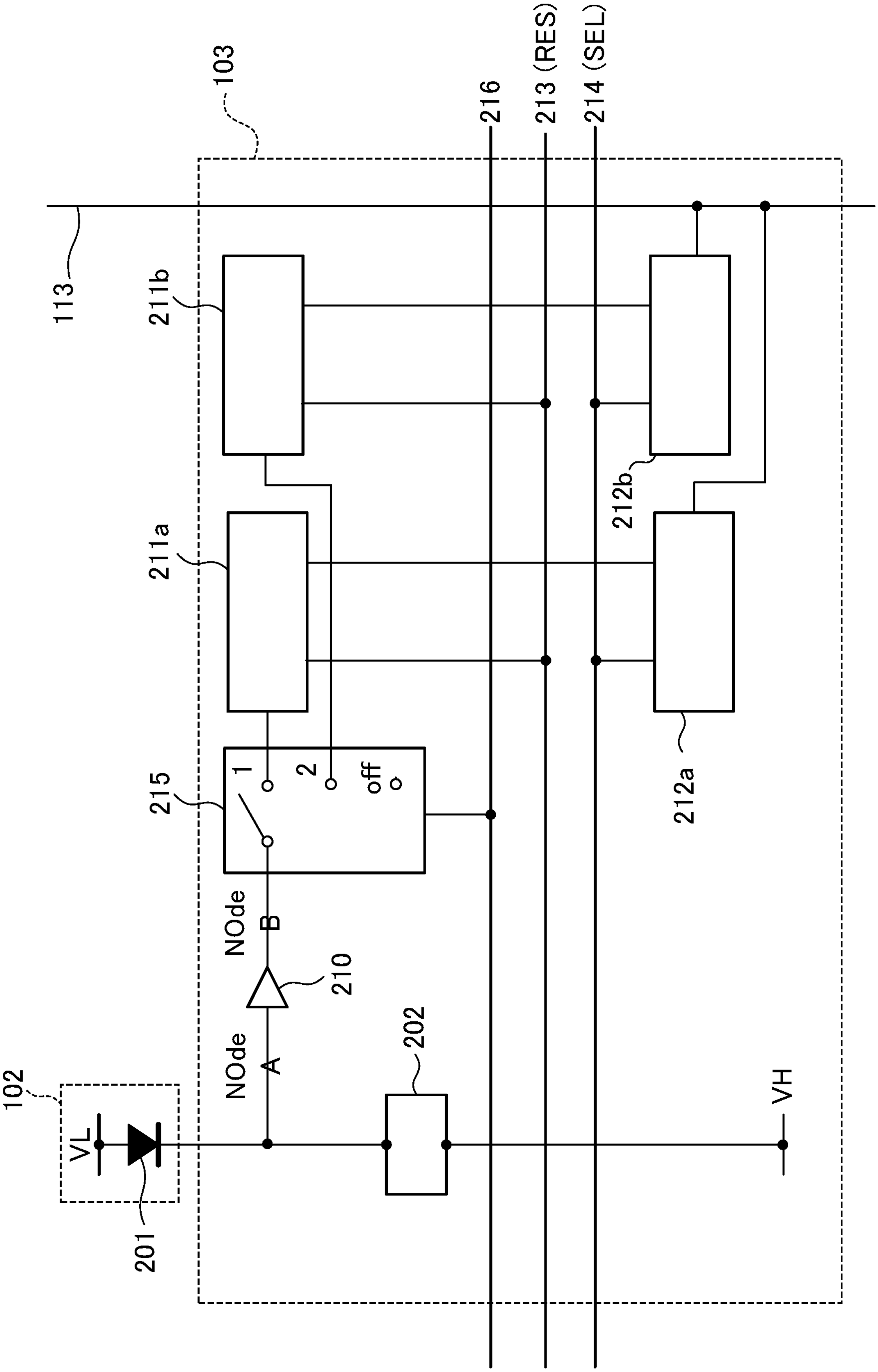
103
216
213 (RES)
214 (SEL)
113
211b
211a
212b
212a
215
1
2
off
NOde B
210
NOde A
202
102
VL
201
VH

FIG. 5

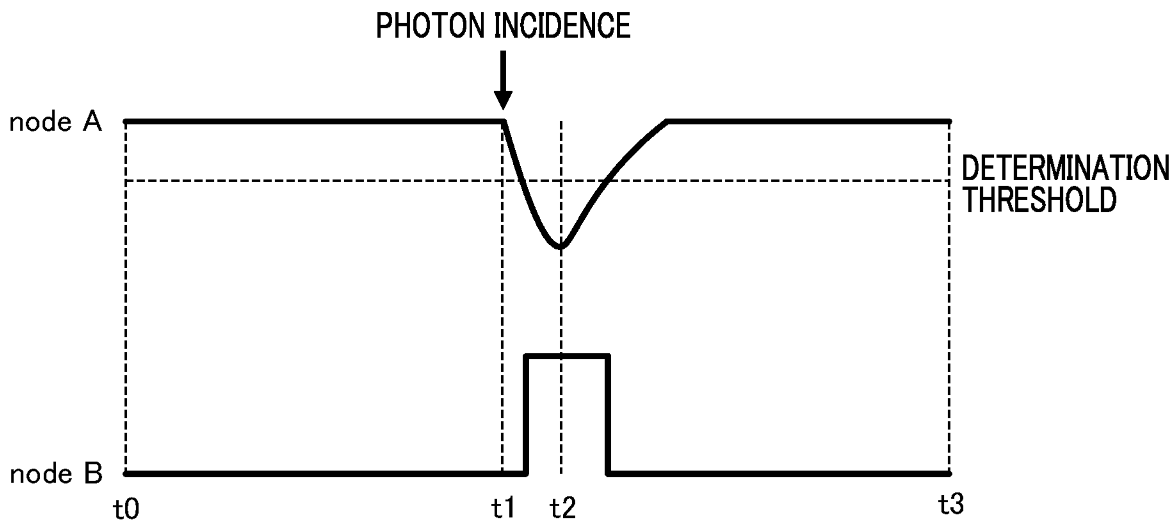
PHOTON INCIDENCE
node A
DETERMINATION THRESHOLD
node B
t0
t1
t2
t3

FIG. 6

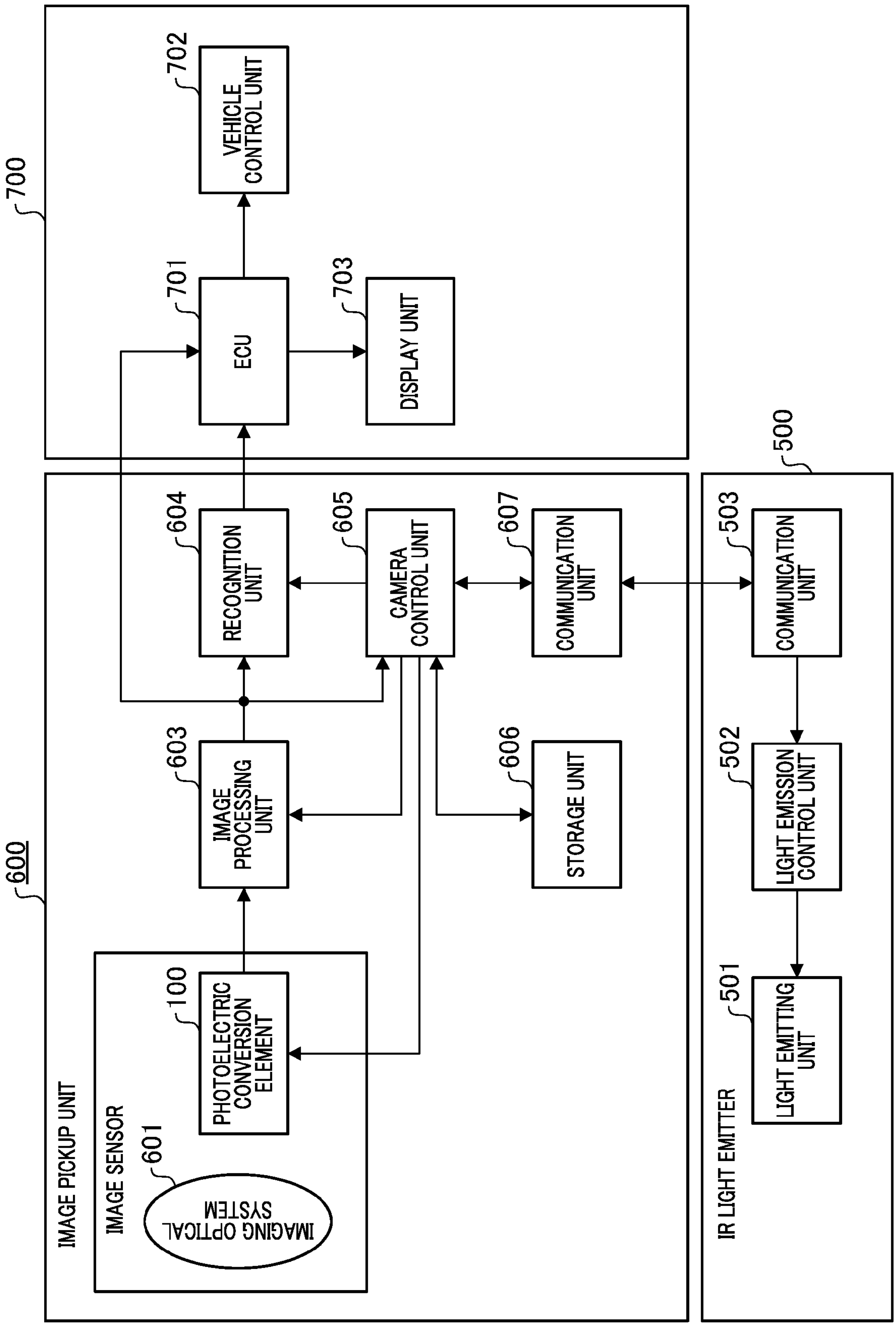
700
701
ECU
702
VEHICLE CONTROL UNIT
703
DISPLAY UNIT
600
IMAGE PICKUP UNIT
IMAGE SENSOR
601
IMAGING OPTICAL SYSTEM
100
PHOTOELECTRIC CONVERSION ELEMENT
603
IMAGE PROCESSING UNIT
604
RECOGNITION UNIT
605
CAMERA CONTROL UNIT
606
STORAGE UNIT
607
COMMUNICATION UNIT
500
IR LIGHT EMITTER
501
LIGHT EMITTING UNIT
502
LIGHT EMISSION CONTROL UNIT
503
COMMUNICATION UNIT

FIG. 7

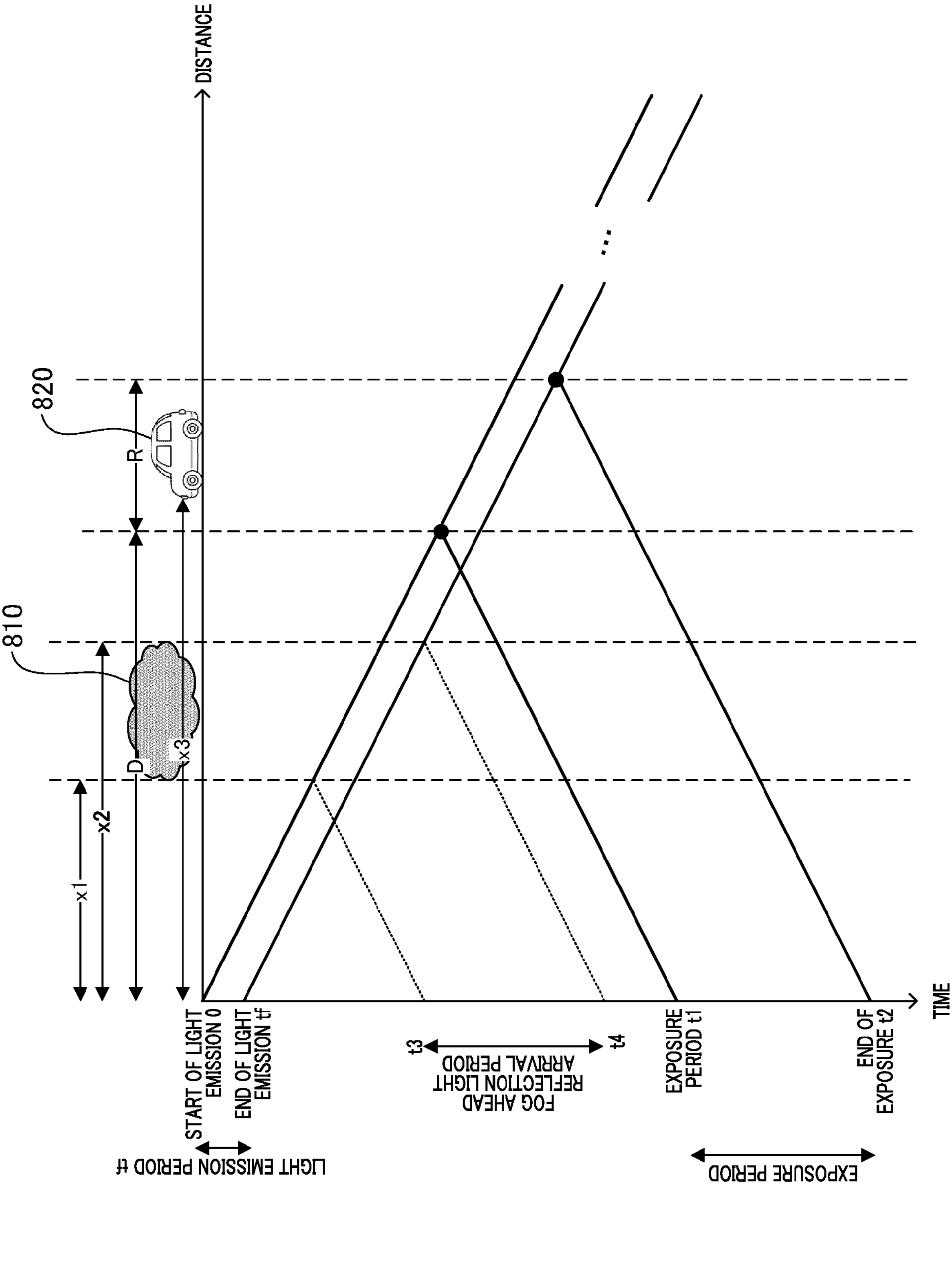
DISTANCE
TIME
820
810
R
D
x1
x2
x3
START OF LIGHT EMISSION 0
END OF LIGHT EMISSION tf
t3
t4
FOG AHEAD REFLECTION LIGHT ARRIVAL PERIOD
EXPOSURE PERIOD t1
END OF EXPOSURE t2
LIGHT EMISSION PERIOD tf
EXPOSURE PERIOD

FIG. 8

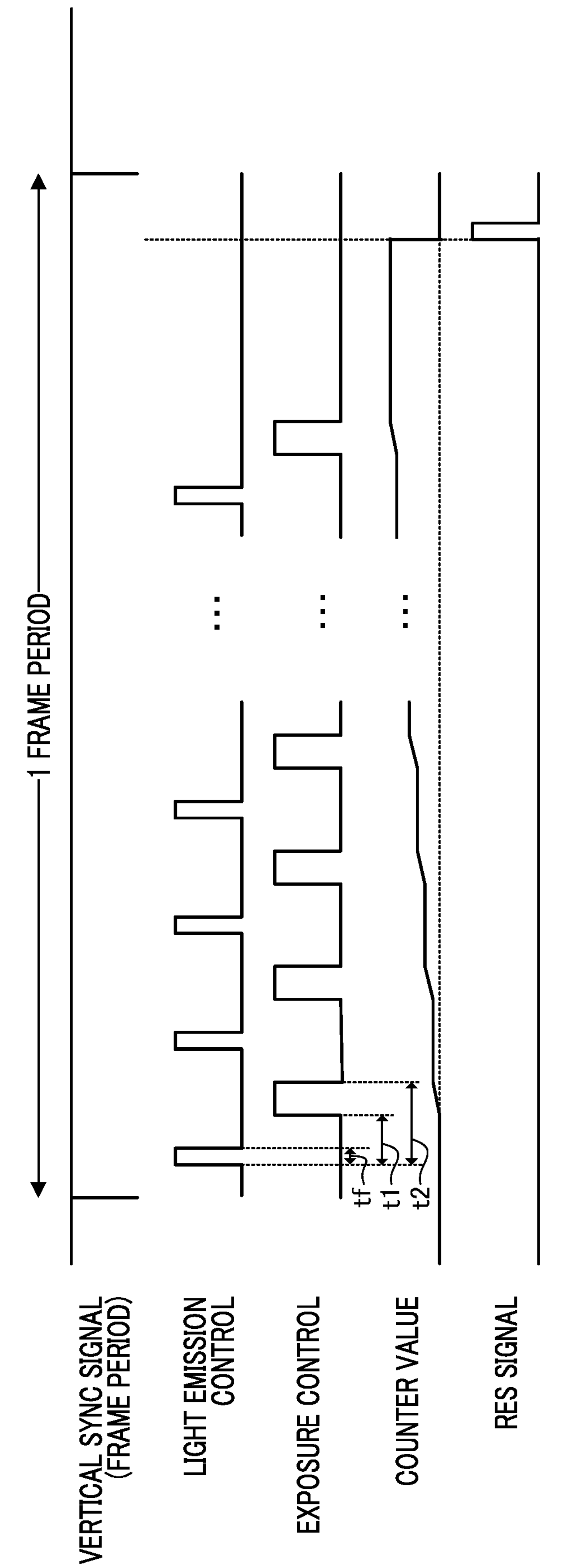
1 FRAME PERIOD
VERTICAL SYNC SIGNAL (FRAME PERIOD)
LIGHT EMISSION CONTROL
EXPOSURE CONTROL
COUNTER VALUE
RES SIGNAL
tf
t1
t2

FIG. 9

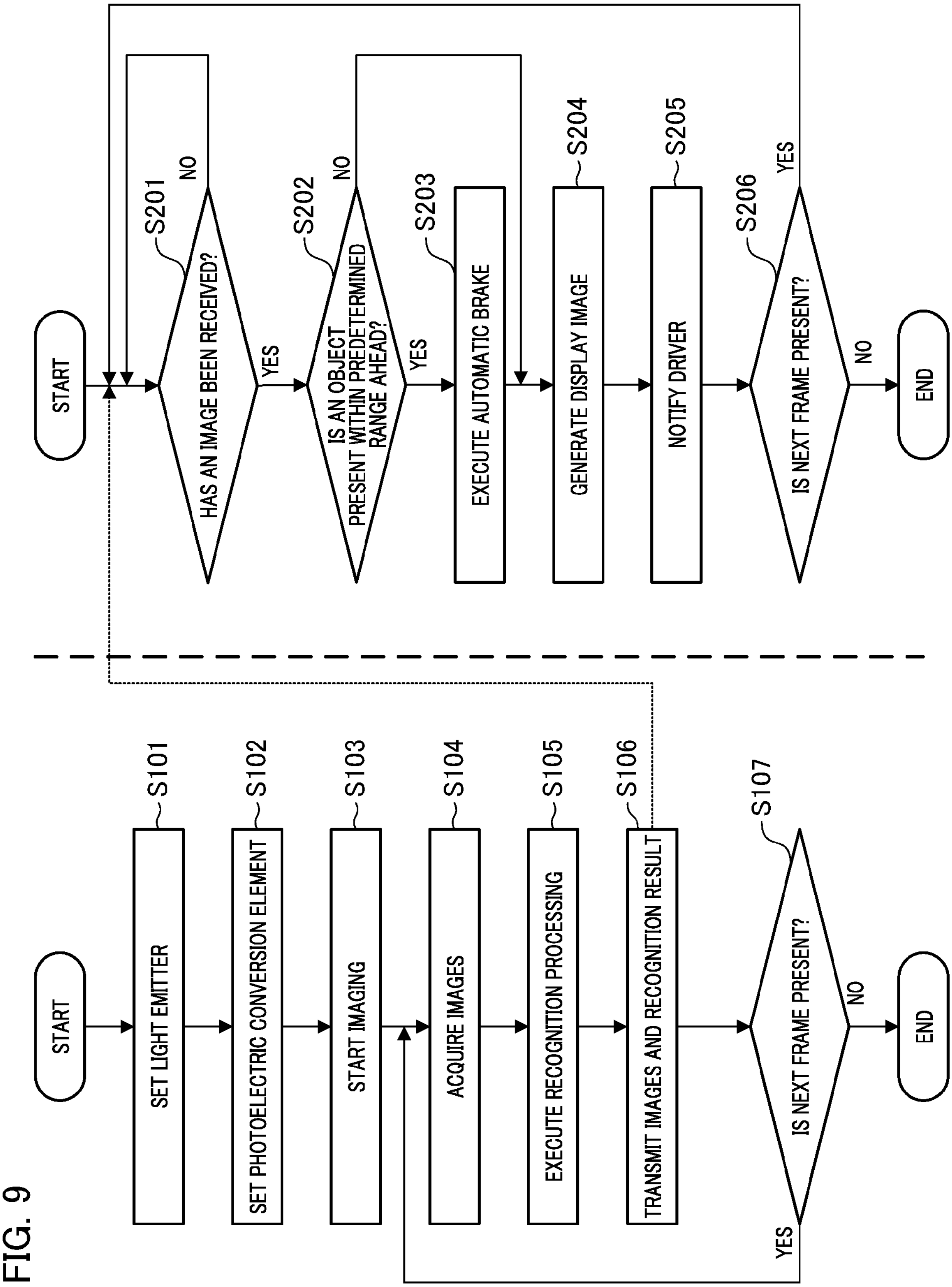
START
SET LIGHT EMITTER
S101
SET PHOTOELECTRIC CONVERSION ELEMENT
S102
START IMAGING
S103
ACQUIRE IMAGES
S104
EXECUTE RECOGNITION PROCESSING
S105
TRANSMIT IMAGES AND RECOGNITION RESULT
S106
IS NEXT FRAME PRESENT?
S107
YES
NO
END
START
HAS AN IMAGE BEEN RECEIVED?
S201
NO
YES
IS AN OBJECT PRESENT WITHIN PREDETERMINED RANGE AHEAD?
S202
NO
YES
EXECUTE AUTOMATIC BRAKE
S203
GENERATE DISPLAY IMAGE
S204
NOTIFY DRIVER
S205
IS NEXT FRAME PRESENT?
S206
YES
NO
END

FIG. 10

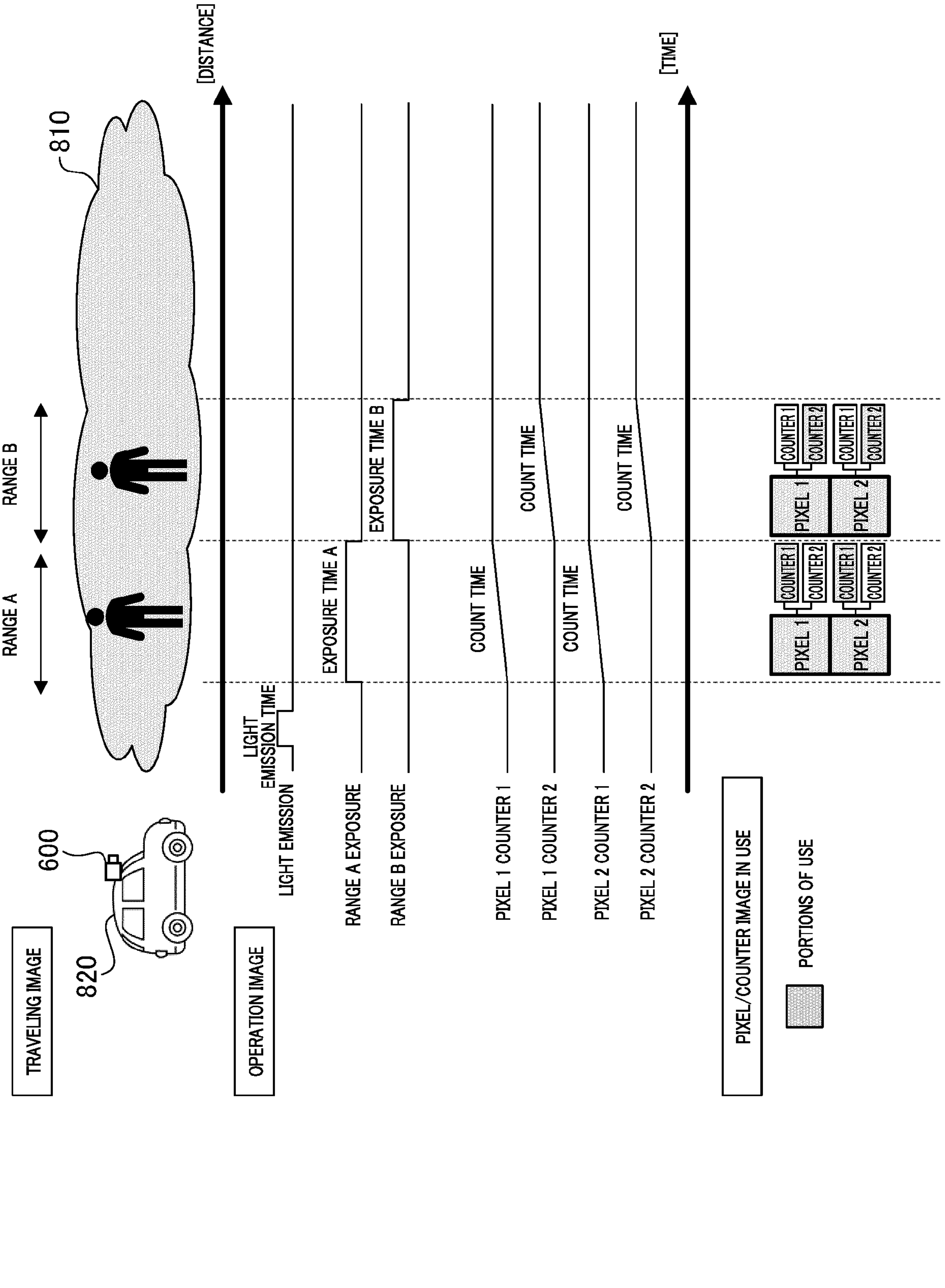
TRAVELING IMAGE
600
820
810
RANGE A
RANGE B
[DISTANCE]
OPERATION IMAGE
LIGHT EMISSION
LIGHT EMISSION TIME
RANGE A EXPOSURE
RANGE B EXPOSURE
EXPOSURE TIME A
EXPOSURE TIME B
PIXEL 1 COUNTER 1
PIXEL 1 COUNTER 2
PIXEL 2 COUNTER 1
PIXEL 2 COUNTER 2
COUNT TIME
COUNT TIME
COUNT TIME
COUNT TIME
[TIME]
PIXEL/COUNTER IMAGE IN USE
PIXEL 1
PIXEL 2
COUNTER 1
COUNTER 2
PORTIONS OF USE

FIG. 11

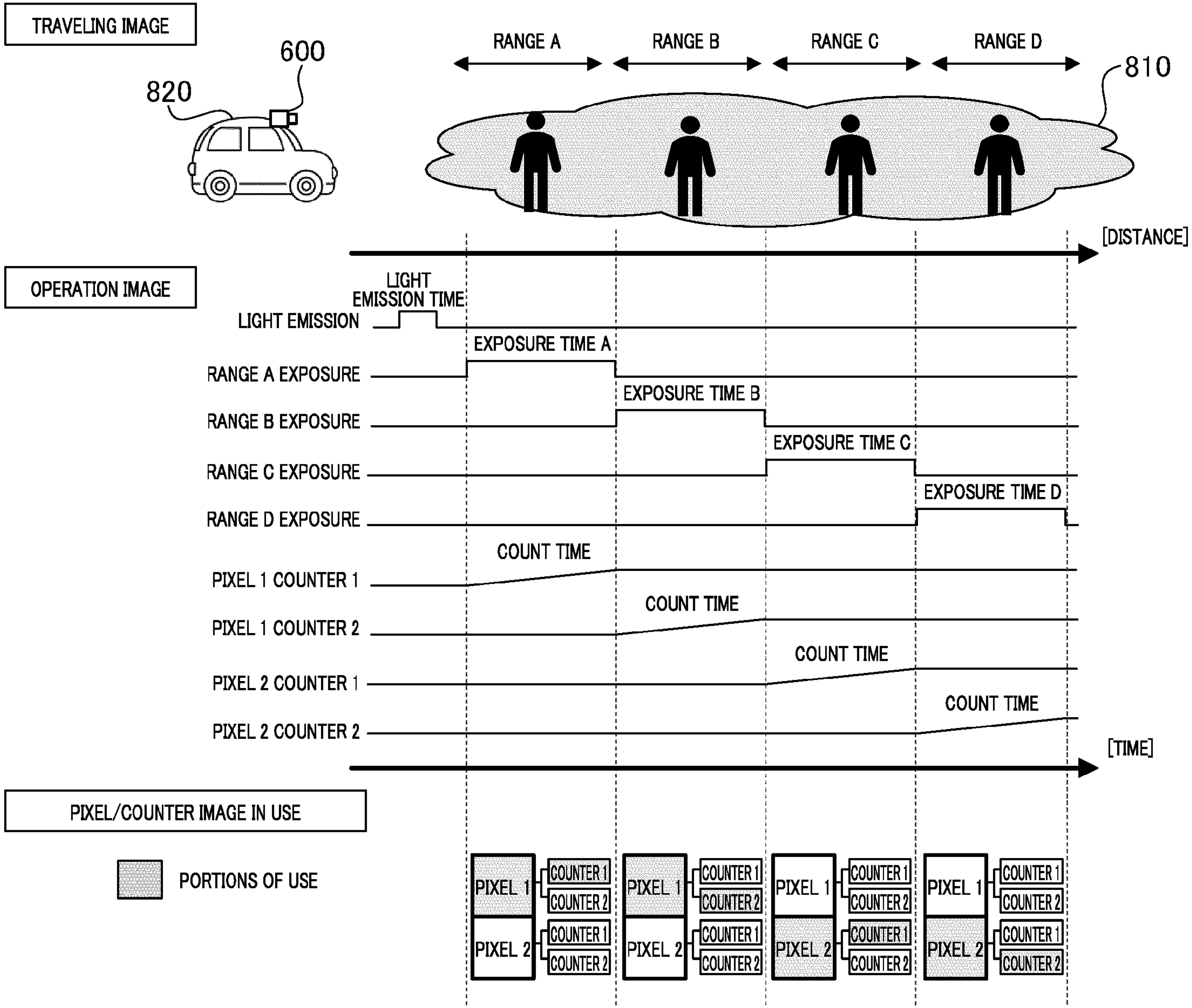
TRAVELING IMAGE
600
820
RANGE A
RANGE B
RANGE C
RANGE D
810
[DISTANCE]
OPERATION IMAGE
LIGHT EMISSION TIME
LIGHT EMISSION
EXPOSURE TIME A
RANGE A EXPOSURE
EXPOSURE TIME B
RANGE B EXPOSURE
EXPOSURE TIME C
RANGE C EXPOSURE
EXPOSURE TIME D
RANGE D EXPOSURE
COUNT TIME
PIXEL 1 COUNTER 1
COUNT TIME
PIXEL 1 COUNTER 2
COUNT TIME
PIXEL 2 COUNTER 1
COUNT TIME
PIXEL 2 COUNTER 2
[TIME]
PIXEL/COUNTER IMAGE IN USE
PORTIONS OF USE
PIXEL 1
COUNTER 1
COUNTER 2
PIXEL 2
COUNTER 1
COUNTER 2

FIG. 12A

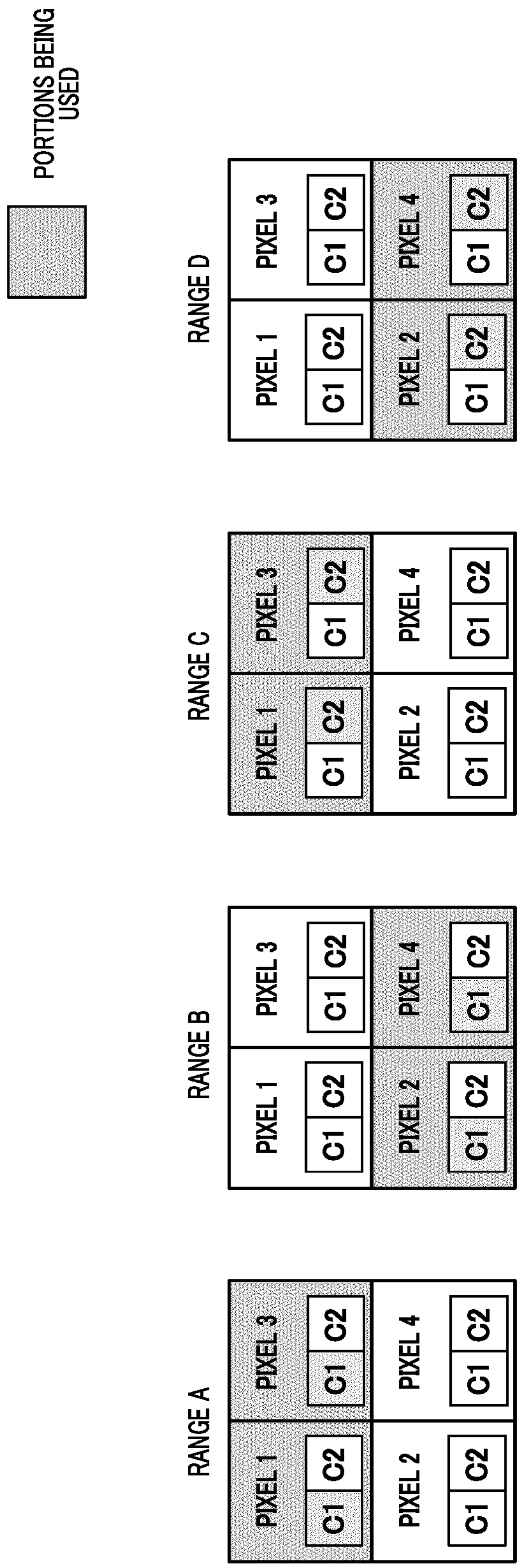


FIG. 12B

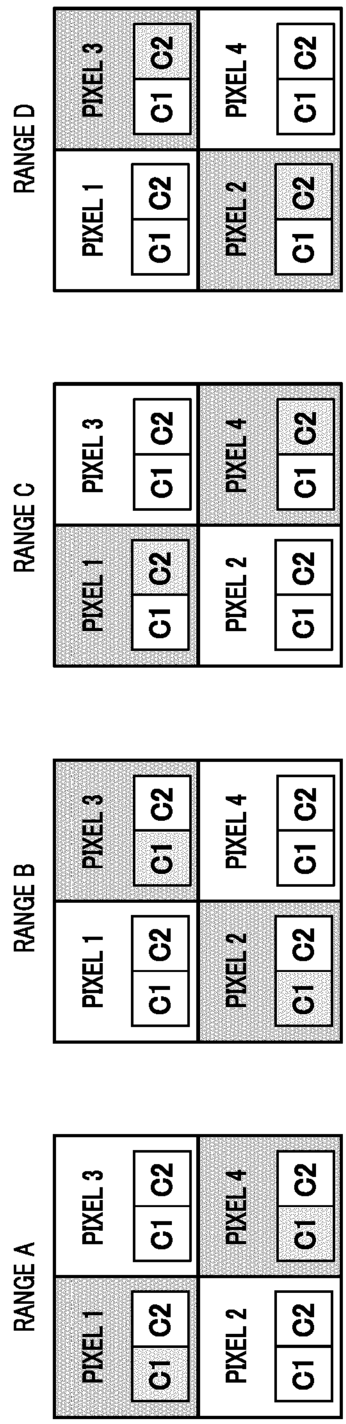

FIG. 13

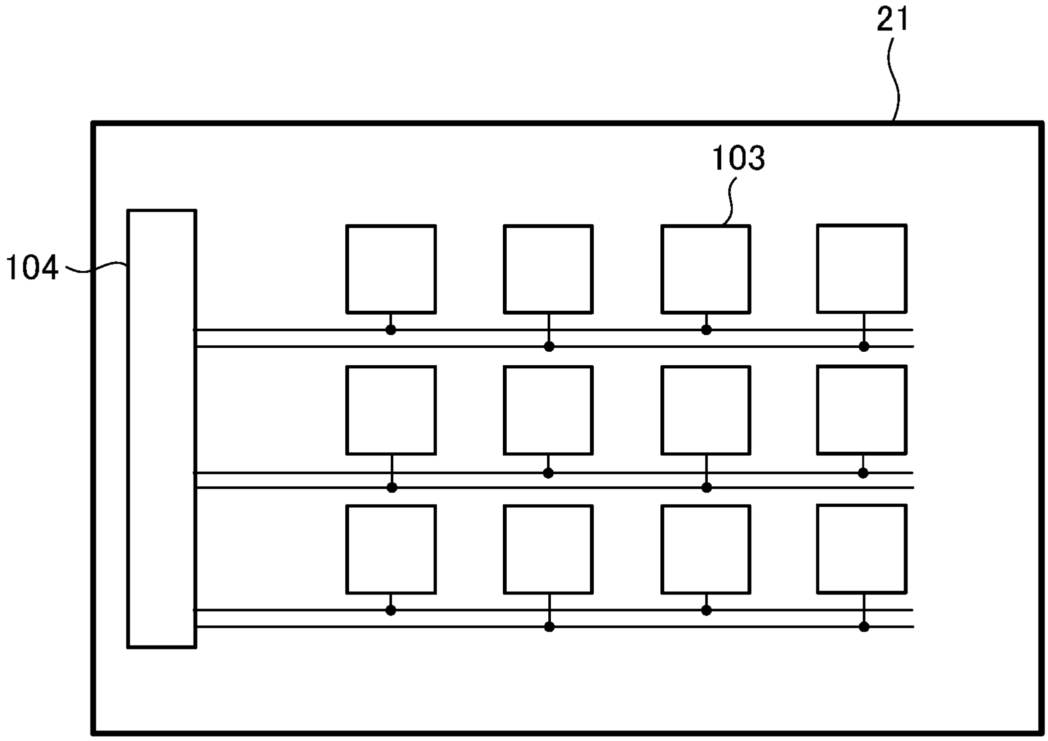

FIG. 14

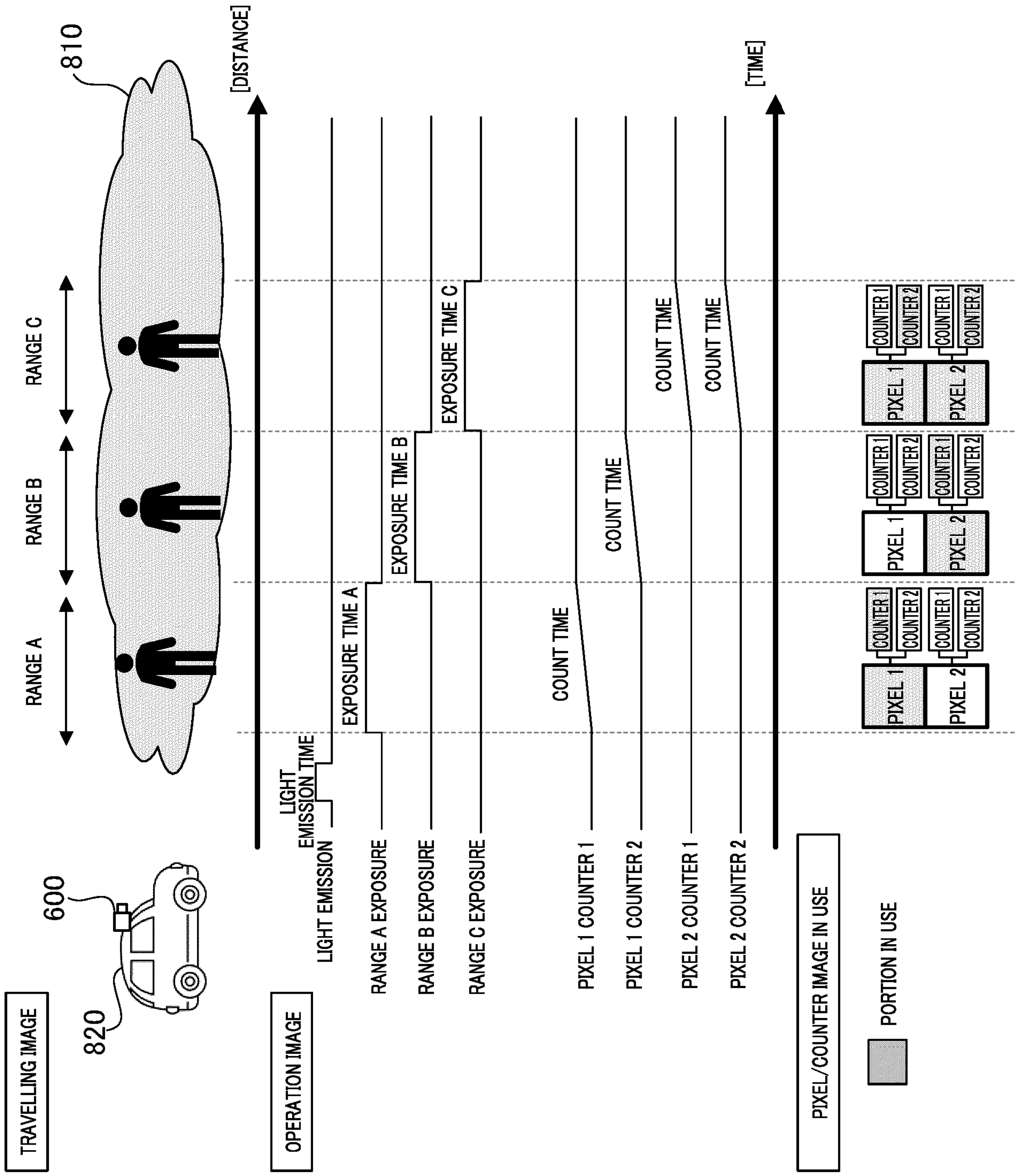
TRAVELLING IMAGE
600
820
810
RANGE A
RANGE B
RANGE C
OPERATION IMAGE
[DISTANCE]
LIGHT EMISSION
LIGHT EMISSION TIME
RANGE A EXPOSURE
EXPOSURE TIME A
RANGE B EXPOSURE
EXPOSURE TIME B
RANGE C EXPOSURE
EXPOSURE TIME C
PIXEL 1 COUNTER 1
PIXEL 1 COUNTER 2
PIXEL 2 COUNTER 1
PIXEL 2 COUNTER 2
COUNT TIME
COUNT TIME
COUNT TIME
COUNT TIME
[TIME]
PIXEL/COUNTER IMAGE IN USE
PIXEL 1
PIXEL 2
COUNTER 1
COUNTER 2
PORTION IN USE

Europäisches Patentamt
European Patent Office
Office européen des brevets

# EUROPEAN SEARCH REPORT

Application Number
EP 25 19 5613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2020/319344 A1 (RONCHINI XIMENES AUGUSTO [US] ET AL)<br>8 October 2020 (2020-10-08)<br>* paragraphs [0069] - [0074], [0081] - [0087]; figures 1,5,9 *<br>----- | 1,7-10<br>2-6 | INV.<br>G01S7/4863<br>G01S7/4865<br>G01S17/18<br>G01S17/894 |
| X<br>Y | US 2023/333217 A1 (FINE NADAV [IL] ET AL)<br>19 October 2023 (2023-10-19)<br>* paragraphs [0028] - [0043]; figures 1-3 *<br>----- | 1,7-10<br>2-6 | |
| Y | WO 2014/150628 A1 (MICROSOFT CORP [US])<br>25 September 2014 (2014-09-25)<br>* paragraphs [0035], [0047] - [0048], [0055]; figures 1,2 *<br>----- | 2-6 | |
| | | | TECHNICAL FIELDS SEARCHED (IPC) |
| | | | G01S |

The present search report has been drawn up for all claims

1

| Place of search | Date of completion of the search | Examiner |
|---|---|---|
| Munich | 15 January 2026 | Theißing, Nikolaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 19 5613

This annex lists the patent family members relating to the patent documents cited in the above-mentioned European search report. The members are as contained in the European Patent Office EDP file on The European Patent Office is in no way liable for these particulars which are merely given for the purpose of information.

15-01-2026

| Patent document cited in search report | Publication date | Patent family member(s) | Publication date |
|---|---|---|---|
| US 2020319344 A1 | 08-10-2020 | US 12146965 B1 | 19-11-2024 |
| | | US 2020319344 A1 | 08-10-2020 |
| US 2023333217 A1 | 19-10-2023 | US 2021165083 A1 | 03-06-2021 |
| | | US 2023333217 A1 | 19-10-2023 |
| | | WO 2021113001 A1 | 10-06-2021 |
| WO 2014150628 A1 | 25-09-2014 | CN 105144698 A | 09-12-2015 |
| | | EP 2974279 A1 | 20-01-2016 |
| | | US 2014267613 A1 | 18-09-2014 |
| | | WO 2014150628 A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017195573 A
- JP 2024147288 A